(19) Europäisches Patentamt
European Patent Office
Office européen des brevets

(11) EP 4 317 259 A1

(12) **EUROPEAN PATENT APPLICATION**
published in accordance with Art. 153(4) EPC

(43) Date of publication:
**07.02.2024 Bulletin 2024/06**

(21) Application number: **22775384.5**

(22) Date of filing: **17.03.2022**

(51) International Patent Classification (IPC):
***C08G 81/00*** *(2006.01)* ***C08J 5/22*** *(2006.01)*
***H01B 1/06*** *(2006.01)* ***H01B 1/12*** *(2006.01)*
***H01M 8/10*** *(2016.01)* ***H01M 8/1018*** *(2016.01)*

(52) Cooperative Patent Classification (CPC):
**C08G 65/40; C08G 81/00; C08J 5/22; C25B 1/04; C25B 9/23; C25B 13/08; H01B 1/06; H01B 1/12; H01M 8/10; H01M 8/1018; H01M 8/1025; H01M 8/1067;** Y02E 60/50

(86) International application number:
**PCT/JP2022/012208**

(87) International publication number:
**WO 2022/202596 (29.09.2022 Gazette 2022/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **23.03.2021 JP 2021048314**

(71) Applicant: **Toray Industries, Inc.**
**Tokyo 103-8666 (JP)**

(72) Inventors:
- **MURAKAMI, Kazuho**
**Otsu-shi, Shiga 520-8558 (JP)**
- **MATSUI, Kazuma**
**Otsu-shi, Shiga 520-8558 (JP)**
- **TANAKA, Tsuyoshi**
**Otsu-shi, Shiga 520-8558 (JP)**
- **IZUHARA, Daisuke**
**Otsu-shi, Shiga 520-8558 (JP)**

(74) Representative: **Hoefer & Partner Patentanwälte mbB**
**Pilgersheimer Straße 20**
**81543 München (DE)**

(54) **POLYELECTROLYTE MOLDED BODY, AND POLYELECTROLYTE MEMBRANE, ELECTROLYTE MEMBRANE WITH CATALYST LAYER, MEMBRANE ELECTRODE ASSEMBLY, SOLID POLYMER-TYPE FUEL CELL, AND WATER ELECTROLYSIS-STYLE HYDROGEN PRODUCTION DEVICE IN WHICH SAID POLYELECTROLYTE MOLDED BODY IS USED**

(57) Provided is a polymer electrolyte article having high proton conductivity, mechanical strength, and chemical stability, wherein, for the average periodic distance in the phase-separated structure of the polymer electrolyte article observed by small-angle X-ray scattering, the average periodic distance in the atmosphere and the average periodic distance in water satisfy the following condition: (the average periodic distance in water) / (the average periodic distance in the atmosphere) $\leq$ 2.20.

EP 4 317 259 A1

## Description

### TECHNICAL FIELD

The present invention relates to a polymer electrolyte article and to a polymer electrolyte article, a polymer electrolyte membrane, a catalyst layer-coated electrolyte membrane, a membrane electrode assembly, a polymer electrolyte fuel cell, and a water electrolysis hydrogen generator in which the polymer electrolyte article is used.

### BACKGROUND ART

Fuel cells are a type of power generator in which a fuel such as hydrogen or methanol is electrochemically oxidized to produce electrical energy, and have recently been noted as a clean energy supply source. Polymer electrolyte fuel cells, among others, typically operate at temperatures as low as about 100°C and have a high energy density and are thus expected to be used for relatively small distributed power generation systems and as power generators for mobile vehicles such as cars and ships in a wide range of applications. In addition, polymer electrolyte fuel cells are noted as power sources for small transportable devices and mobile devices, and are expected as substitutes for secondary batteries such as nickel hydrogen batteries and lithium-ion batteries in mobile phones and personal computers.

Typically, a fuel cell is constituted by cell units each having a membrane electrode assembly (MEA) and separators sandwiching the MEA. The MEA comprises an electrolyte membrane, catalyst layers deposited on both sides of the electrolyte membrane, and gas diffusion layers deposited on both the catalyst layers. In the MEA, a pair of electrode layers are made up of the catalyst and gas diffusion layers deposited on both sides of the electrolyte membrane; one of the electrode layers acts as an anode electrode, and the other as a cathode electrode. The anode electrode is in contact with a fuel gas, including hydrogen, and the cathode electrode is in contact with air, thereby generating electricity through electrochemical reactions. The electrolyte membrane is mainly composed of a polymer electrolyte material. The polymer electrolyte material is also used as a binder for the catalyst layers.

The fluorinated polymer electrolyte "Nafion®" (manufactured by Chemours Company) has traditionally been widely used as the polymer electrolyte material. Recently, however, there have been increasing efforts to develop low-cost hydrocarbon-based electrolyte materials with excellent film properties that can replace "Nafion®". Hydrocarbon-based electrolyte materials have excellent low gas permeability and heat resistance, and electrolyte materials using an aromatic poly(ether ketone) or an aromatic poly(ether sulfone) have been particularly actively studied. However, conventional hydrocarbon-based electrolyte materials exhibit proton conductivity comparable to or higher than the fluorinated electrolyte material under high humidity conditions, and, conversely, poor proton conductivity under low humidity conditions.

Polymer electrolytes with a phase-separated structure have been proposed as hydrocarbon-based polymer electrolytes that exhibit high proton conductivity even under low humidity conditions and have high mechanical strength and chemical stability (see, for example, Patent Documents 1 to 3).

### PRIOR ART DOCUMENT

### PATENT DOCUMENT

Patent Document 1: WO 2008/018487 A
Patent Document 2: WO 2013/031675 A
Patent Document 3: JP 2006-278321 A

### SUMMARY OF THE INVENTION

### PROBLEMS TO BE SOLVED BY THE INVENTION

However, the improvement effects of proton conductivity under low humidity conditions, mechanical strength, and chemical stability are still insufficient even when polymer electrolytes described in Patent Documents 1 to 3 are used, and polymer electrolyte articles useful in industry need further improvements in these properties.

In view of the background art, an object of the present invention is to provide a polymer electrolyte article having high proton conductivity and physical durability.

## MEANS FOR SOLVING THE PROBLEMS

The inventors found that both high proton conductivity and physical durability can be achieved in a polymer electrolyte article having an average periodic distance of phase-separated structure in water and an average periodic distance of phase-separated structure in the atmosphere within suitable ranges, and completed the present invention.

That is, the present invention is a polymer electrolyte article having a phase-separated structure, in which article the average periodic distance in water in the phase-separated structure and the average periodic distance in the atmosphere in the phase-separated structure, which average periodic distances are observed by small-angle X-ray scattering, satisfy the following condition: (the average periodic distance in water) / (the average periodic distance in the atmosphere) < 2.20.

## EFFECT OF THE INVENTION

The polymer electrolyte article of the present invention has both high proton conductivity and physical durability.

## BRIEF DESCRIPTION OF THE DRAWING

Fig. 1 is a schematic illustration of the phase-separated structures of polymer electrolyte articles.

## MODE FOR CARRYING OUT THE INVENTION

Embodiments of the present invention will be described in detail below, but the present invention is not limited to the following embodiments and may be performed with various modifications depending on the purposes and applications.

### [Phase-Separated Structure]

A polymer electrolyte article according to an embodiment of the present invention has a phase-separated structure. The phrase "a polymer electrolyte article has a phase-separated structure" means that a phase-separated structure is observable when a polymer electrolyte article is observed by small-angle X-ray scattering (SAXS) or transmission electron microscopy (TEM).

For the average periodic distance in the phase-separated structure of the polymer electrolyte article of the present invention observed by SAXS, the average periodic distance in the phase-separated structure in water (hereinafter referred to as "the average periodic distance in water") and the average periodic distance in the phase-separated structure in the atmosphere (hereinafter referred to as "the average periodic distance in the atmosphere") satisfy the following condition: (the average periodic distance in water) / (the average periodic distance in the atmosphere) <_ 2.20. In the present invention, the average periodic distance in water and the average periodic distance in the atmosphere are defined as values measured by synchrotron radiation small-angle X-ray scattering under the conditions described in Examples below.

In the polymer electrolyte article, the relation between the average periodic distance in water and the average periodic distance in the atmosphere is represented by the following formula: (the average periodic distance in water) ≥ (the average periodic distance in the atmosphere). This is because a hydrophilic domain(s) in the electrolyte in water swells with water. That is, it is expected that an excellent and less swelling polymer electrolyte article will be obtained when the average periodic distance in water is closer to the average periodic distance in the atmosphere. The inventors conducted research based on the hypothesis described above and found that both relatively high levels of proton conductivity and physical durability are achievable when the following condition is satisfied: (the average periodic distance in water) / (the average periodic distance in the atmosphere) ≤ 2.20.

The relation between the average periodic distance in water and the average periodic distance in the atmosphere is preferably represented by the following formula: (the average periodic distance in water) / (the average periodic distance in the atmosphere) < 2.10, and more preferably by the following formula: (the average periodic distance in water) / (the average periodic distance in the atmosphere) ≤ 1.80, and particularly preferably by the following formula: (the average periodic distance in water) / (the average periodic distance in the atmosphere) ≤ 1.40.

The average periodic distance in the atmosphere is preferably not less than 35 nm, more preferably not less than 40 nm, particularly preferably not less than 50 nm, in terms of proton conductivity under low humidity conditions. The upper limit of the average periodic distance in the atmosphere is not specifically limited, but a periodic distance of not more than 100 nm is preferred to preserve the phase-separated structure.

The average periodic distance in water is preferably not less than 50 nm, more preferably not less than 60 nm, in terms of proton conductivity under high humidity conditions, and is preferably not more than 80 nm, more preferably

not more than 70 nm, to increase the dimensional stability.

Examples of a method of controlling the average periodic distance in the atmosphere and the average periodic distance in water include (1) a method of modifying the temperature and humidity conditions and the solvent drying rate for the preparation of the polymer electrolyte article, (2) a method of appropriately selecting a solvent for preparing the polymer electrolyte article depending on the polarity of the polymer electrolyte to achieve a favorable phase separation size, and (3) a method of regulating the molecular weight of a segment containing an ionic group (hereinafter referred to as an "ionic segment") and the molecular weight of a segment containing no ionic group (hereinafter referred to as a "non-ionic segment"), namely regulating the molecular chain length in a block copolymer constituting a polymer electrolyte. For example, the average periodic distance in water tends to increase as the molecular weight of the ionic segment is increased relative to that of the non-ionic segment, and the average periodic distance in the atmosphere tends to increase as the molecular weight of the non-ionic segment is increased relative to that of the ionic segment. When both the molecular weight of the ionic segment and the molecular weight of the non-ionic segment are increased, the average periodic distance in the atmosphere tends to increase.

Among those examples, method (3) is favorable in terms of processability. The molecular chain length of the ionic segment is one of the factors influencing the size of the hydrophilic domain which forms a proton-conducting channel in the phase-separated structure. The number-average molecular weight of the ionic segment (Mn1) is preferably greater than 45,000 to increase the hydrophilic domain size. Mn1 is more preferably greater than 50,000, even more preferably greater than 60,000, and most preferably greater than 80,000. The upper limit of Mn1 is not specifically limited, but a number-average molecular weight of less than 150,000 is preferred to increase the dimensional stability of the polymer electrolyte article under high temperature and humidity conditions.

The molecular chain length of the non-ionic segment is one of the factors influencing the size of the hydrophobic domain which contributes to the crystallinity and water resistance. The number-average molecular weight of the non-ionic segment (Mn2) is preferably not less than 10,000 and more preferably not less than 15,000. The upper limit of Mn2 is not specifically limited, but a number-average molecular weight of not more than 50,000 is preferred in terms of polymerization property.

In addition, Mn1 and Mn2 preferably satisfy the following formula 1, more preferably the following formula 2, in a block copolymer. Such a block copolymer is preferred for adjusting the average periodic distances in the phase-separated structure in the atmosphere and in water to the aforementioned ranges.

$$1.7 \leq Mn1/Mn2 \leq 7.0 \qquad \text{(Formula 1)}$$

$$2.0 \leq Mn1/Mn2 \leq 5.0 \qquad \text{(Formula 2)}$$

A method of adjusting Mn1 or Mn2 to a preferred molecular weight is not specifically limited as long as the method attains the target molecular weight, and examples of the method include a method of synthesizing a segment having a target number-average molecular weight by an aromatic nucleophilic substitution reaction or a coupling reaction, and a method of synthesizing a polymer having a smaller number-average molecular weight than a target number-average molecular weight and connecting the polymers, as the structural unit for segment, with a linker (L1). The method of connecting the polymers with a linker is particularly preferred because the method is less restrictive in terms of process.

Preferably, the polymer electrolyte article according to the embodiment of the present invention has a bicontinuous phase-separated structure. The phase-separated structure can be controlled by modifying the aggregation states and shapes of the ionic and non-ionic segments, the temperature and humidity conditions during phase separation formation, the solvent polarity, and the solvent drying rate. Examples of the configuration of the phase-separated structure of the electrolyte membrane are shown in Fig. 1. The phase-separated structures are broadly classified into four categories: bicontinuous structure (M1), lamellar structure (M2), cylindrical structure (M3), sea-island structure (M4). The polymer electrolyte article of the present invention has any one of the phase-separated structures (M1) to (M4).

In the structures (M1) to (M4) shown in Fig. 1, the white continuous phase (Phase 1) is formed from one segment selected from the ionic and non-ionic segments, and the gray continuous or dispersed phase (Phase 2) is formed from the other segment.

The above phase-separated structures are described in, for example, Annual Review of Physical Chemistry, 41, 1990, p. 525.

High proton conductivity can be achieved even under low humidity conditions by controlling the higher order structures and shapes of the ionic and non-ionic segments. That is, any one of the phase-separated structures (M1) to (M4) in the electrolyte membrane allows the formation of a continuous proton-conducting channel(s) and increases the proton conductivity.

In bicontinuous (M1) and lamellar (M2) phase-separated structures, both ionic and non-ionic segments form

continuous phases. Electrolyte membranes with such phase-separated structures have high proton conductivity doe to the continuous proton-conducting channel(s), as well as show high mechanical endurance due to the crystallinity of a domain comprising the non-ionic segment. That is, the polymer electrolyte article of the present invention preferably has a bicontinuous (M1) or lamellar (M2) phase-separated structure, and particularly preferably a bicontinuous (M1) phase-separated structure.

The domain described above refers to a mass formed in one or more polymer chains by the aggregation of similar segments.

The bicontinuous (M1) or lamellar (M2) phase-separated structure in an electrolyte membrane can be confirmed by the following procedure. Specifically, when a desired image is observed by the following procedure, the electrolyte membrane is determined to have the structure. In the procedure, three orthographic views of digital slices of the electrolyte membrane from three directions: length width and height, are compared with a three-dimensional diagram of the electrolyte membrane obtained by TEM tomography. For example, in an electrolyte membrane comprising a block copolymer having ionic and non-ionic segments, both hydrophilic domains comprising the ionic segment(s) and hydrophobic domains comprising the non-ionic segment(s) form continuous phases in all three orthographic views in cases where the phase-separated structure is bicontinuous (M1) or lamellar (M2).

The continuous phases are intertwined in the bicontinuous structure (M1), while the continuous phases are layered in the lamellar structure (M2). In this context, the continuous phase refers to a phase in which the individual domains are not macroscopically isolated but are interconnected, although some of the individual domains may not be interconnected.

The cylindrical (M3) and sea-island (M4) structures can be distinguished from the bicontinuous (M1) and lamellar (M2) structures by the fact that one of the domains does not form a continuous phase in at least one plane, or by the patterns shown in each of the three orthographic views.

In the observation of the phase-separated structure, the aggregation states of the ionic and non-ionic segments and the contrast between the ionic and non-ionic segments can be clearly visualized and enhanced by, for example, immersing an electrolyte membrane in an aqueous solution of lead acetate at a concentration of 2% by weight for 2 days to exchange ionic groups with lead ions for subsequent transmission electron microscopy (TEM) and TEM tomography.

In addition to transmission electron microscopy (TEM), the phase-separated structure can be analyzed by small-angle X-ray scattering (SAXS), atomic force microscopy (AFM), or the like.

[Block Copolymer]

Preferably, the polymer electrolyte article according to the embodiment of the present invention comprises a block copolymer having one or more ionic segments and one or more non-ionic segments. In the present invention, the non-ionic segments may contain a small amount of an ionic group as long as the effects of the present invention are not adversely affected by the ionic group. In the present invention, the phrase "containing no ionic group" and the term "non-ionic" may be used to convey the same meaning. In the present invention, the term "segment" refers to a substructure of a macromonomer in a block copolymer, the macromonomer being used in the synthesis of the block copolymer.

The polymer electrolyte article according to the embodiment of the present invention has an ion exchange capacity of not less than 1.5 meq/g and not more than 3.1 meq/g, which is preferable in terms of the balance between proton conductivity and physical durability. The ion exchange capacity is more preferably not less than 1.9 meq/g and not more than 3.0 meq/g or not less than 2.1 meq/g and not more than 2.8 meq/g.

The ionic segments in the block copolymer preferably have a high ion exchange capacity in terms of proton conductivity under low humidity conditions, and the ion exchange capacity is preferably not less than 2.5 meq/g, more preferably not less than 3.0 meq/g, and most preferably not less than 3.5 meq/g. In addition, the upper limit of the ion exchange capacity is not specifically limited, but is preferably not more than 6.5 meq/g, more preferably not more than 5.0 meq/g, and most preferably not more than 4.5 meq/g.

The non-ionic segments in the block copolymer preferably have a low ion exchange capacity in terms of hot water resistance, mechanical strength, dimensional stability, and physical durability, and the ion exchange capacity is preferably not more than 1.0 meq/g, more preferably not more than 0.5 meq/g, and most preferably not more than 0.1 meq/g.

As used herein, the term "ion exchange capacity" refers to the molar equivalent of ion exchange groups introduced into a block copolymer, a polymer electrolyte article, a polymer electrolyte material, or a polymer electrolyte membrane on a unit dry weight basis. The ion exchange capacity can be measured by elemental analysis, neutralization titration, and the like. In cases where the ion exchange group is the sulfonate group, an elemental analysis method is used to calculate the ion exchange capacity from the S/C ratio. However, it is difficult to measure the ion exchange capacity by this method when a sulfur source other than the sulfonate group is included as the ion exchange group. Accordingly, in the present invention, the ion exchange capacity is defined as the value measured by the neutralization

titration method described below.

A hydrocarbon-based polymer is preferred in terms of physical durability as a polymer electrolyte contained in the polymer electrolyte article according to the embodiment of the present invention. The term "hydrocarbon-based polymer" as used in the present invention refers to polymers other than perfluoropolymers.

An aromatic hydrocarbon polymer is preferred as a polymer electrolyte contained in the polymer electrolyte article according to the embodiment of the present invention, in terms of crystallinity, dimensional stability, and mechanical endurance. Aromatic hydrocarbon polymer is a polymer composed mainly of aromatic rings.

In the present invention, the aromatic rings contained in the aromatic hydrocarbon polymer may be not only hydrocarbon-based aromatic rings but also heterocycles. In addition, the polymer may be composed of an aliphatic unit in part and an aromatic ring unit. Specific polymers as constituents of the aromatic hydrocarbon polymer include polymers having a structure selected from polysulfone, polyethersulfone, poly(phenylene oxide), poly(arylene ether) polymers, poly(phenylene sulfide), poly(phenylene sulfide sulfone), poly(*para*-phenylene), polyarylene polymers, poly(arylene ketone), polyether ketone, poly(arylene phosphine oxide), poly(ether phosphine oxide), polybenzoxazole, polybenzothiazole, polybenzoimidazole, polyamide, polyimide, polyetherimide, and polyimidesulfone in the main chain together with aromatic rings.

Among these, aromatic polyether polymers are preferred in terms of cost and polymerization properties. Aromatic polyether polymer is a polymer which is composed mainly of aromatic rings and whose repeating unit has at least an ether linkage for linking the aromatic ring units. For example, polymers having the structure of aromatic polyether polymers include, but are not limited to, aromatic polyether, aromatic poly(ether ketone), aromatic poly(ether ether ketone), aromatic poly(ether ketone ketone), aromatic poly(ether ether ketone ketone), aromatic poly(ether ketone ether ketone ketone), aromatic polyetherimide, aromatic poly(ether sulfone).

Among these examples, aromatic poly(ether ketone) polymers and poly(ether sulfone) polymers are preferred in terms of chemical stability and cost, and aromatic poly(ether ketone) polymers are most preferred in terms of mechanical strength, dimensional stability, and physical durability.

Aromatic poly(ether ketone) polymer is a polymer which is composed mainly of aromatic rings and whose repeating unit has at least an ether linkage and a ketone linkage for linking aromatic ring units.

Aromatic poly(ether sulfone) polymer is a polymer which is composed mainly of aromatic rings and whose repeating unit has at least an ether linkage and a sulfone linkage for linking aromatic ring units.

[Ionic Segment]

The ionic segments contained in the block copolymer preferably have a structure represented by the following general formula (S 1) in terms of physical durability and dimensional stability of the polymer electrolyte article.

$$* - Ar^1 - Y^1 - Ar^2 - O - Ar^3 - Y^2 - Ar^4 - O - * \quad (S1)$$

In the general formula (S1), $Ar^1$ to $Ar^4$ each independently represent a substituted or unsubstituted arylene group; at least one of $Ar^1$ to $Ar^4$ has an ionic group; $Y^1$ and $Y^2$ each independently represent a ketone group or a protecting group from which a ketone group is derivable; the symbol * represents an attachment point for the general formula (S1) or another structural unit.

Examples of aromatic ring groups preferred as $Ar^1$ to $Ar^4$ include, but are not limited to, hydrocarbon-based arylene groups, such as phenylene group, naphthylene group, biphenylene group, and fluorenediyl group; and heteroarylene groups, such as pyridinediyl group, quinoxalinediyl group, and thiophenediyl group.

In the present invention, the ionic group is preferably a group of atoms having a negative charge, in particular a group of atoms having a proton exchange capacity. As such functional groups, sulfonate, sulfonimide, sulfate, phosphonate, phosphate, and carboxylate groups represented by the following formule (f1) to (f7) are suitable for use.

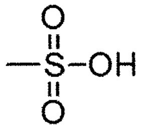
(f1)

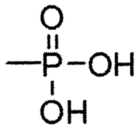
(f4)

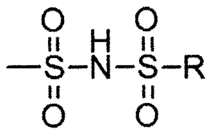 (f2)

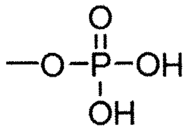 (f5)

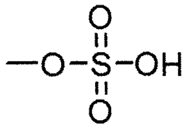 (f3)

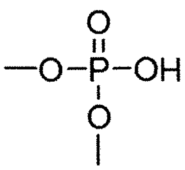 (f6)

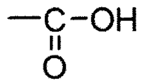 (f7)

The ionic group includes salts of the above functional groups (f1) to (f7). Examples of cations that form the salts described above include any metal cation and $NR4^+$ (R is any organic group). The metal cation is not specifically limited, but the cations of Na, K, and Li are preferred because these metals are inexpensive and protons are easily exchanged.

Two or more of the ionic groups may be present in a polymer electrolyte material, and the combination of the ionic groups may be appropriately determined depending on the polymer structure and the like. Among these, the ionic groups having at least sulfonate group, sulfonimide group, and/or sulfate group is more preferred in terms of high proton conductivity, and the ionic groups having sulfonate group is most preferred in terms of raw material cost.

For the block copolymer used in the present invention, the structure represented by the general formula (S 1) is preferably a structure represented by the following general formula (P1) in terms of dimensional stability and raw material availability, and more preferably a structure represented by the following general formula (P2) in terms of raw material availability and polymerization properties.

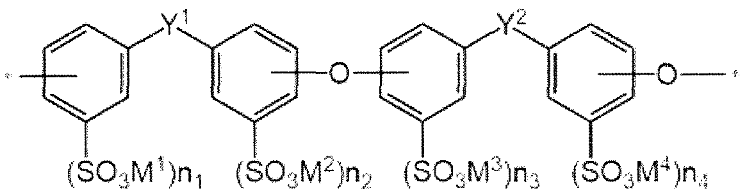 (P1)

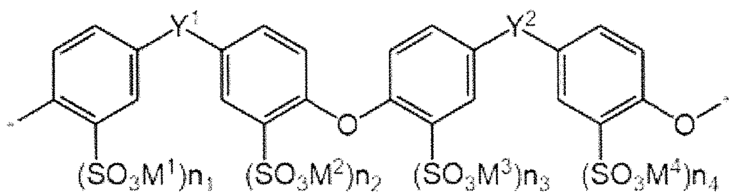 (P2)

In the general formulas (P1) and (P2), $Y^1$ and $Y^2$ each independently represent a ketone group or a protecting group from which a ketone group is derivable; $M^1$ to $M^4$ each independently represent a hydrogen atom, a metal cation, or an ammonium cation; $n_1$ to $n_4$ each independently represent 0 or 1; at least one of $n_1$ to $n_4$ is 1; the symbol * represents an attachment point for the general formula (P1), (P2), or another structural unit.

Furthermore, $n_1 = 1$, $n_2 = 1$, $n_3 = 0$, and $n_4 = 0$, or $n_1 = 0$, $n_2 = 0$, $n_3 = 1$, and $n_4 = 1$, are most preferred in terms of raw material availability and polymerization properties.

The content of a structural unit represented by the general formula (S1) in the ionic segments is more preferably not less than 20% by mole, even more preferably not less than 50% by mole, and most preferably not less than 80% by mole.

For example, a monomer described, for example, in paragraphs 0109 to 0115 of WO 2013/031675 can be used as the ionic monomer used to synthesize the structural unit of the ionic segments as described above.

Preferred example of a structure which may be included as the ionic segments or the structural unit constituting

the ionic segments, other than the structure represented by the general formula (S1), is the structure of an aromatic poly(ether ketone) copolymer having structures represented by the following general formulas (T1) and (T2).

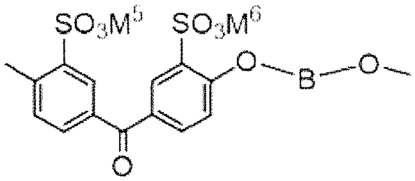
(T1)

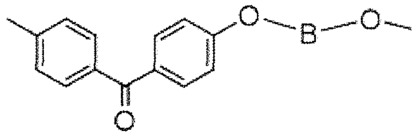
(T2)

In the general formulas (T1) and (T2), B represents a divalent organic group containing an aromatic ring; $M^5$ and $M^6$ each independently represent a hydrogen atom, a metal cation, or an ammonium cation.

The ion exchange capacity can be controlled by adjusting the composition ratio of structural units represented by the general formulas (T1) and (T2) in the aromatic poly(ether ketone) copolymer.

Among others, ionic segments having the structure represented by the general formula (P1) and the structure represented by the general formulae (T1) and (T2) are particularly preferred. In such ionic segments, p1 is preferably not less than 75 parts by mole, more preferably not less than 90 parts by mole, and even more preferably 100% by mole when the total molar amount of t1 and t2 is taken as 100 parts by mole, wherein p1, t1, and t2 represent the amount of the structural units represented by the general formulas (P1), (T1), and (T2), respectively.

Examples of the divalent organic group B containing an aromatic ring in the general formulas (T1) and (T2) include various residues of divalent phenolic compounds and those in which a sulfonate group in introduced to the residues, which can be used to obtain aromatic polyether polymers by aromatic nucleophilic substitution polymerization.

Preferred specific examples of the divalent organic group B containing an aromatic ring include, but are not limited to, groups represented by the following general formulae (X'-1) to (X'-6).

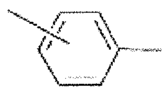
(X'-1)

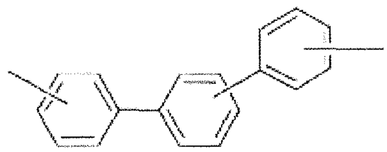
(X'-4)

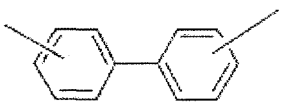
(X'-2)

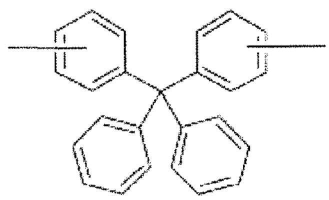
(X'-5)

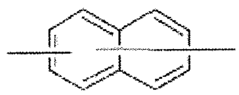
(X'-3)

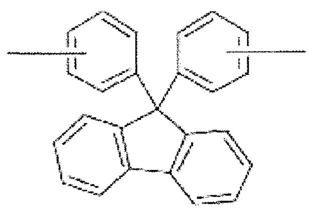
(X'-6)

These groups may be substituted with an ionic group or an aromatic group. In addition, these groups can be used in combination as needed. Among these groups, the groups represented by the general formulae (X'-1) to (X'-4) are more preferred and the groups represented by the general formulae (X'-2) and (X'-3) are most preferred in terms of crystallinity, dimensional stability, toughness, and chemical stability.

A method of adjusting Mn1 to a target molecular weight is not specifically limited as long as the method provides the target molecular weight, and examples of the method include a method of synthesizing a polymer having a smaller number-average molecular weight than a target number-average molecular weight and connecting the polymer, as structural units for segment, with a linker (L1).

For example, when polymers with a number-average molecular weight of 30,000 as structural units are linked

together by a linker (L1), the dimerization results in a segment with a number-average molecular weight of 60,000 and the trimerization results in a segment with a number-average molecular weight of 90,000.

The structural units linked by the linker (L1) can be the same structural units or a combination of different structural units.

A compound used as the linker (L1) is required to be highly reactive so that the compound can link the structural units together while preventing randomization of the polymer and splitting of segments.

Preferred specific examples of the linker (L1) include decafluorobiphenyl, hexafluorobenzene, 4,4'-difluorodiphenyl sulfone, and 2,6-difluorobenzonitrile, but the present invention is not limited to these examples.

[Non-Ionic Segment]

The non-ionic segments contained in the block copolymer preferably has a structure represented by the following general formula (S2) in terms of mechanical strength and dimensional stability of the polymer electrolyte membrane of the present invention.

$$*—Ar^5—Y^3—Ar^6—O—Ar^7—Y^4—Ar^8—O—* \quad (S2)$$

In the general formula (S2), $Ar^5$ to $Ar^8$ each independently represent an arylene group, provided that $Ar^5$ to $Ar^8$ all do not comprise an ionic group; $Y^3$ and $Y^4$ each independently represent a ketone group or a protecting group from which a ketone group is derivable; the symbol * represents an attachment point for the general formula (S2) or another structural unit.

Examples of aromatic ring groups preferred as $Ar^5$ to $Ar^8$ include, but are not limited to, hydrocarbon-based arylene groups, such as phenylene group, naphthylene group, biphenylene group, and fluorenediyl group; and heteroarylene groups, such as pyridinediyl group, quinoxalinediyl group, and thiophenediyl group.

For the block copolymer of the present invention, the non-ionic segments preferably have a structure represented by the following formula (P3) in terms of raw material availability. Among others, the non-ionic segments more preferably have a structural unit represented by the following formula (P4) in terms of mechanical strength, dimensional stability, and physical durability depending on the crystallinity.

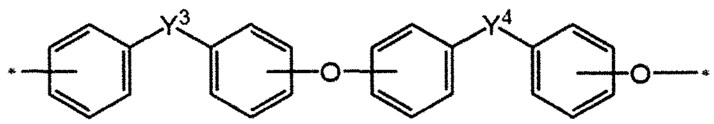
(P3)

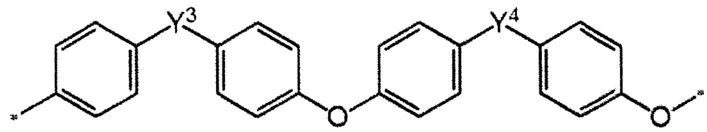
(P4)

In the general formulas (P3) and (P4), $Y^3$ and $Y^4$ each independently represent a ketone group or a protecting group from which a ketone group is derivable; the symbol * represents an attachment point for the general formulas (P3) and (P4) or another structural unit.

Non-ionic segments having a higher content of a structure represented by the general formula (S2), or (P3) and (P4) are preferred; and the content of the structure in the non-ionic segments is more preferably not less than 20% by mole, even more preferably not less than 50% by mole, and most preferably not less than 80% by mole. A content of the structure in the non-ionic segments of less than 20% by mole is undesirable because the effects of the present invention on mechanical strength, dimensional stability, and physical durability depending on the crystallinity may be insufficient.

[Detail of Block Copolymer]

When a block copolymer is used for the present invention, the block copolymer is preferably a block copolymer having an ionic segment(s) comprising a structural unit represented by the general formula (S1) and a non-ionic segment(s) comprising a structural unit represented by the general formula (S2).

A non-ionic segment containing a structural unit represented by the general formula (S3) is a crystalline segment. A block copolymer having such a non-ionic segment can be produced by forming a block copolymer precursor having

a protecting group introduced at least in the non-ionic segment and then removing at least some of the protecting groups contained in the formed article. Block copolymers are more likely to have poor processability than random copolymers due to crystallization of polymers in confined domains. Therefore, a protecting group is preferably introduced at least in the non-ionic segment to improve processability. In cases where the processability is still poor, a protecting group is preferably introduced in the ionic segments.

A protecting group described in, for example, paragraphs 0122 to 0135 of JP 2015-79762 A can be used as the protecting group described above.

Preferably, the block copolymer contains one or more linker (L2) moieties connecting the ionic and non-ionic segments. In the present invention, the linker (L2) is defined as a site for connecting the ionic and non-ionic segments which has a chemical structure different from those of the ionic and non-ionic segments.

The linker (L2) may have a structure identical to or different from that of the linker (L1) described above. This linker (L2) connects different segments to each other while preventing randomization of the copolymer by ether exchange reaction, splitting of segments, and other side reactions that can occur during copolymer synthesis. Therefore, a compound used to provide such a linker (L2) can be used as a raw material for the formation of a block copolymer without reducing the molecular weights of the segments described above.

Preferred specific examples of the linker (L2) include decafluorobiphenyl, hexafluorobenzene, 4,4'-difluorodiphenyl sulfone, and 2,6-difluorobenzonitrile, but the present invention is not limited to these examples.

Specific methods of synthesizing a block copolymer are indicated below. However, the present invention is not limited to these methods.

The synthesis of each segment in a block copolymer is preferably carried out by an aromatic nucleophilic substitution reaction because this synthesis process is easy to perform. The aromatic nucleophilic substitution reaction is a method in which a monomer mixture of a dihalide compound and a diol compound undergoes a reaction in the presence of a basic compound. The polymerization can be performed in the temperature range of from 0 to 350°C, preferably in the temperature of from 50 to 250°C. The reaction can be carried out in the absence of a solvent, but is preferably carried out in a solvent. Examples of a solvent that can be used include aprotic polar solvents such as N,N-dimethylacetamide, N,N-dimethylformamide, N-methyl-2-pyrrolidone, dimethylsulfoxide, sulfolane, 1,3-dimethyl-2-imidazolidinone, and hexamethylphosphonetriamide, and are not limited to these as long as the solvent can be used as a stable solvent in aromatic nucleophilic substitution reaction. These organic solvents may be used alone or as a mixture of two or more kinds thereof.

Examples of the basic compound include sodium hydroxide, potassium hydroxide, sodium carbonate, potassium carbonate, sodium bicarbonate, and potassium bicarbonate. However, any basic compound can be used and is not limited to the above examples as long as the compound can convert diols to ones having an active phenoxide structure. In addition, a crown ether, such as 18-crown-6, is preferably added to increase the nucleophilicity of the phenoxide. Crown ethers can coordinate with sodium or potassium ions in sulfonate groups to increase the solubility of the sulfonate salt moieties of the monomers or polymer in an organic solvent and are therefore suitable for use.

The aromatic nucleophilic substitution reaction may produce water as a byproduct. In this case, water can be removed from the reaction system independently of the polymerization solvent by allowing toluene, for example, to exist as an azeotrope in the reaction system. A water absorbent such as a molecular sieve can be used as a method to remove water from the system.

The block copolymer can be produced by synthesizing a block copolymer precursor and then removing at least some of the protecting groups contained in the precursor. A process for producing the block copolymer and the block copolymer precursor in the present invention preferably comprises at least the following steps (1) and (2). These steps can help to obtain the block copolymer having the high molecular weight, thereby improving mechanical endurance and durability. In addition, both segments can be alternately introduced to obtain a block copolymer that exhibits high proton conductivity under low humidity conditions, in which the phase-separated structure and domain sizes are strictly controlled.

In step (1), the -OM groups of either an ionic segment bearing -OM groups (M represents a hydrogen atom, a metal cation, or an ammonium cation) at both ends or a non-ionic segment bearing -OM groups at both ends are reacted with a linker compound to introduce linker moieties into the segment at both ends. In step (2), the both terminal linker moieties of the synthesized segment comprising the linker moieties introduced in step (1) are attached to the both terminal -OM groups of the other segment in a polymerization reaction to produce a block copolymer or block copolymer precursor comprising the ionic and non-ionic segments.

Specific examples of the segment represented by the general formula (S1) having -OM groups at both ends and the segment represented by the general formula (S2) having -OM groups at both ends include segments having structures represented by the following formulas (H3-1) and (H3-2), respectively. In addition, structures obtained by reacting the segments having structures represented by the formulas (H3-1) and (H3-2) with a halide linker include, for example, the structures represented by the following formulas (H3-3) and (H3-4), respectively. However, the present invention is not limited to these examples.

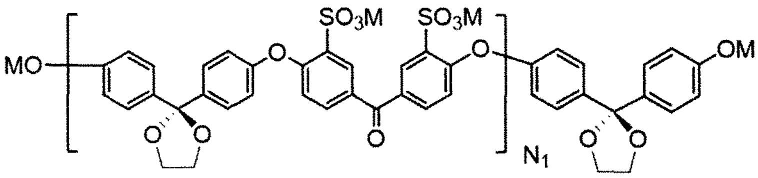

(H3-1)

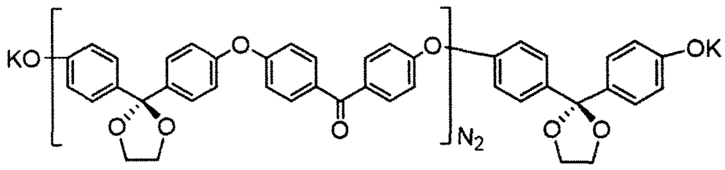

(H3-2)

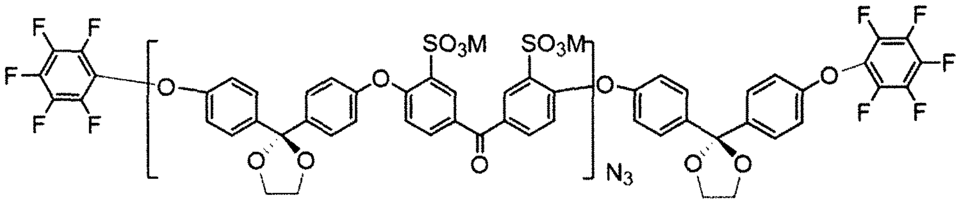

(H3-3)

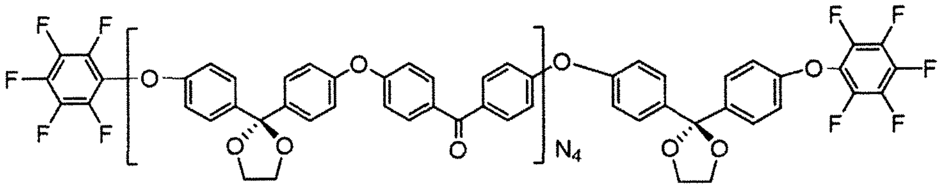

(H3-4)

In the formulae (H3-1) to (H3-4), $N_1$, $N_2$, $N_3$, and $N_4$ each independently represent an integer of 1 to 200.

In cases where the ionic segment comprises linkers, specific examples of the ionic segment comprising the linker moieties introduced in step (1) described above include the structures represented by the following formulae (H3-1L) and (H3-3L). However, the present invention is not limited to these examples.

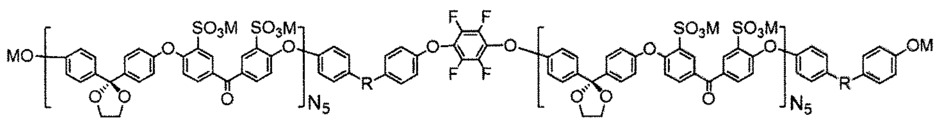

(H3-1L)

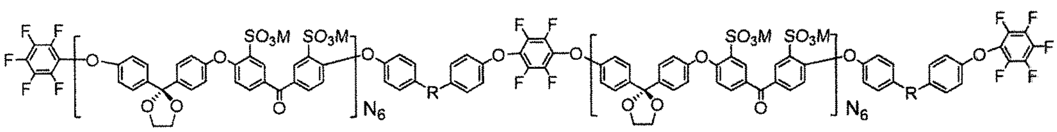

(H3-3L)

In the formulae (H3-1L) to (H3-3L), $N_5$ and $N_6$ each independently represent an integer of 1 to 200.

In the formulae (H3-1) to (H3-4), (H3-1L), and (H3-3L), the halogen atom, terminal -OM group, and alkali metal are F, -OK group, and Na or K, respectively. However, any halogen atom, terminal -OM group, and alkali metal can be used and are not limited to the above examples. In addition, these formulae are provided for the purpose of aiding the reader in understanding the disclosure and do not necessarily accurately represent, for example, the chemical structures, exact compositions, and arrangement of polymer components in a polymer and the position and number of sulfonate groups, and molecular weights; and the ionic segment and the non-ionic segment are not limited to those represented by the formulae.

Furthermore, in the formulae (H3-1) to (H3-4), (H3-1L), and (H3-3L), a ketal group is introduced as a protecting group into any of the segments. However, in the present invention, a protecting group may be introduced into a component with high crystallinity and low solubility. Therefore, the ionic segment does not always require a protecting group, and an ionic segment without a protecting group is also suitable for use in terms of durability and dimensional stability.

[Polymer Electrolyte Article]

The polymer electrolyte article according to the embodiment of the present invention preferably has both a phase-separated structure and crystallinity in terms of dimensional stability and mechanical strength. In general, dimensional stability and mechanical strength are negatively correlated with ion exchange capacity. However, the crystallinity of the polymer electrolyte article according to the embodiment of the present invention allows the polymer electrolyte article to have higher dimensional stability than a polymer electrolyte without crystallinity even if the ion exchange capacity is increased.

The presence or absence of the crystallinity can be confirmed by differential scanning calorimetry (DSC) or wide-angle X-ray diffraction. As used herein, the presence of crystallinity means that the heat of crystallization of the polymer electrolyte article measured by differential scanning calorimetry is not less than 0.1 J/g or that the crystallinity of the polymer electrolyte article measured by wide-angle X-ray diffraction is not less than 0.5%. That is, "the presence of crystallinity" in the present invention means any one of that a polymer can crystallize as the temperature rises, that a polymer has a crystallizable property, and that a polymer has already crystallized. Additionally, the term "amorphous polymer" refers to a non-crystalline polymer or a polymer that cannot be substantially crystallized. Accordingly, a polymer may be amorphous at a time when the polymer is not sufficiently crystallized, even though the polymer is a crystalline polymer.

In specific aspects, the polymer electrolyte article according to the embodiment of the present invention can be in various forms depending on the uses, such as a plate form, a fiber form, a hollow fiber form, a particle form, an agglomerate form, a microporous form, a coating form, a foaming form, and a binder form in electrode catalyst layers, in addition to a membrane form (including a film and a film-like product). Among these forms, a membrane form and a binder form are preferred, and a membrane form is particularly preferred. A polymer electrolyte membrane according to an embodiment of the present invention is included in the polymer electrolyte article described above.

For the formation of the membrane from the polymer electrolyte article according to the embodiment of the present invention, for example, a method of forming a membrane from a solution of the polymer electrolyte or from a molten material of the polymer electrolyte can be performed, during which the polymer electrolyte still has a protecting group, such as a ketal group. Examples of the former method include a method of dissolving the polymer electrolyte material in a solvent such as N-methyl-2-pyrrolidone, applying and spreading the resulting solution over a glass plate or the like, and removing the solvent from the solution to form a membrane.

The solvent used to form the membrane should be a solvent that can dissolve the block copolymer and can be removed later. For example, aprotic polar solvents, such as N,N-dimethylacetamide, N,N-dimethylformamide, N-methyl-2-pyrrolidone, dimethyl sulfoxide, sulfolane, 1,3-dimethyl-2-imidazolidinone, and hexamethylphosphoric triamide; ester solvents, such as $\gamma$-butyrolactone and butyl acetate; carbonate solvents, such as ethylene carbonate and propylene carbonate; alkylene glycol monoalkyl ethers, such as ethylene glycol monomethyl ether, ethylene glycol monoethyl ether, propylene glycol monomethyl ether, and propylene glycol monoethyl ether; alcohol solvents, such as isopropanol; and water, and mixtures thereof are suitable for use as the solvent. The aprotic polar solvents are most preferable in terms of the highest dissolving power. Moreover, a crown ether, such as 18-crown-6, is preferably added to increase the solubility of the ionic segments.

In a preferred method, a polymer solution prepared to have a required solid content is filtered under normal pressure or under pressure to remove impurities from the polymer solution and to produce a strong membrane. The filter used in this process is not specifically limited, but a glass filter or a metal filter is suitable for use. In the filtration, the smallest size of the filter pores through which the polymer solution flows is preferably not more than 1 $\mu$m.

In the method for preparing the polymer electrolyte membrane, a membrane composed of the block copolymer is produced, for example, by the process described above, and at least some of the protecting groups are later removed from protected sites. For example, in cases where ketal moieties are present as protecting groups, at least some of the ketone moieties protected by the ketal are converted to ketone moieties through deprotection of the ketal moieties. According to this method, a membrane can be formed from a solution of a less soluble block copolymer, and the resulting membrane can provide both high proton conductivity and excellent dimensional stability, mechanical strength, and physical durability.

Alternatively, an electrolyte membrane can be formed in which the ionic groups form salts with an alkali metal or alkaline earth metal cation, and the alkali metal or alkaline earth metal cations are then exchanged with protons. In this step, the formed membrane is preferably brought into contact with an acidic aqueous solution, specifically and more preferably immersed in an acidic aqueous solution. In this step, protons in the acidic aqueous solution are exchanged for cations bonded to the ionic groups by ionic bond, and residual water-soluble impurities, residual monomers, the solvent, and residual salts are removed at the same time.

The acidic aqueous solution is not limited to a specific solution, but sulfuric acid, hydrochloric acid, nitric acid, trifluoromethanesulfonic acid, methanesulfonic acid, phosphoric acid, citric acid, or the like is suitable for use. The conditions of the acidic aqueous solution, such as temperature and concentration, should be appropriately determined,

and an aqueous solution of sulfuric acid at a temperature of not less than 0°C and not more than 80°C and a concentration of not less than 3% by mass and not more than 30% by mass is suitable for use in terms of productivity.

The thickness of the polymer electrolyte membrane of the present invention is more preferably not less than 1 μm for the purpose of providing sufficient mechanical strength and physical durability to withstand practical use, and preferably not more than 2000 μm for the purpose of reducing the resistance of the membrane, that is, improving the power generation performance. The thickness of the membrane is even more preferably not less than 3 μm and not more than 200 μm. The thickness of the membrane can be controlled by changing the concentration of the solution or the thickness of the coating on the substrate.

In addition, the polymer electrolyte membrane may contain additives used for conventional high-molecular-weight compounds, such as a crystal nucleating agent, a plasticizer, a stabilizer, an antioxidant, and/or a mold release agent, as long as the addition of such additives does not conflict with the object of the present invention.

Moreover, the polymer electrolyte article of the present invention may contain various polymers, elastomers, fillers, fine particles, and various additives, for the purpose of improving mechanical strength, thermostability, processability, and the like, as long as the aforementioned properties are not adversely affected. Furthermore, the polymer electrolyte article may be reinforced with, for example, a microporous membrane, nonwoven fabric, or mesh.

The polymer electrolyte article of the present invention can be used for various applications including, for example, medical applications, such as artificial skin; filtration applications; ion exchange resin applications, such as chlorine-resistant reverse osmosis membranes; various construction material applications; electrochemical applications, humidification membranes; antifog films; antistatic films; deoxidation membranes; solar cell membranes; and gas barrier membranes. The polymer electrolyte article of the present invention is more suitable for use in, among other things, various electrochemical applications. Examples of the electrochemical applications include polymer electrolyte fuel cells, redox flow cells, water electrolysis systems, chlor-alkali electrolysis systems, electrochemical hydrogen pumps, and water electrolysis hydrogen generators.

Polymer electrolyte fuel cells, electrochemical hydrogen pumps, and water electrolysis hydrogen generators use a structure in which catalyst layers, electrode substrates, and separators are sequentially laminated on both surfaces of the polymer electrolyte membrane in the order indicated. A laminate prepared by laminating catalyst layers on both surfaces of an electrolyte membrane (that is, a laminate having a layer configuration of catalyst layer/electrolyte membrane/catalyst layer) is called a catalyst layer-coated electrolyte membrane (CCM), and a laminate prepared by sequentially laminating catalyst layers and gas diffusion substrates on both surfaces of an electrolyte membrane (that is, a laminate having a layer configuration of gas diffusion substrate/catalyst layer/electrolyte membrane/catalyst layer/gas diffusion substrate) is called a membrane electrode assembly (MEA). The polymer electrolyte membrane of the present invention is particularly suitable for use as a polymer electrolyte membrane constituting such CCMs and MEAs.

EXAMPLES

(1) Molecular Weight of Polymer

The number-average molecular weight and weight-average molecular weight of a polymer were measured by GPC. A HLC-8022 GPC system manufactured by Tosoh Corporation was used as an integrated ultraviolet detector-differential refractometer system, and a TSKgel Guard Column Super H-H column (inner diameter: 4.6 mm, length: 3.5 cm) manufactured by Tosoh Corporation was used as a guard column, and two TSKgel Super HM-H columns (inner diameter: 6.0 mm, length: 15 cm) manufactured by Tosoh Corporation were used as GPC columns.

The sample in an N-methyl-2-pyrrolidone solvent (an N-methyl-2-pyrrolidone solvent containing lithium bromide at a concentration of 10 mmol/L) at a concentration of 0.1 wt% was used for the measurement at a flow rate of 0.2 mL/min, a temperature of 40°C, and a measurement wavelength of 265 nm to determine the number-average molecular weight and weight-average molecular weight of the polymer against polystyrene standard.

(2) Ion Exchange Capacity (IEC)

The ion exchange capacity was measured by the neutralization titration method described in the following subparagraphs 1 to 4. The measurement was repeated three times to calculate the average.

1. Proton-exchange was performed on a block copolymer, and the block copolymer was washed thoroughly with pure water, and the water was wiped off the block copolymer, and the block copolymer was then dried under vacuum at 100°C for a period of not less than 12 hours to measure the dry weight.
2. The block copolymer was mixed with 50 mL of a 5 wt% aqueous solution of sodium sulfate and allowed to stand for 12 hours to perform ion exchange.
3. A generated sulfuric acid was titrated with a 0.01 mol/L aqueous solution of sodium hydroxide. A commercially

available phenolphthalein solution at a concentration of 0.1% (w/v) for titration use was added as an indicator, and the titration was terminated when the color of the indicator turned pale reddish violet.

4. The value of IEC was calculated from the following formula:

$$\text{IEC (meq/g)} = [\text{Concentration of the aqueous solution of sodium hydroxide (mmol/ml)} \times \text{Drop volume (ml)}] / \text{Dry weight of the sample (g)}.$$

(3) Dry-Humid Dimensional Change Ratio

A 3 mm × 20 mm test piece was taken from a membrane sample, and the test piece was mounted on a sample holder of a TMA/SS6100 thermomechanical analyzer (manufactured by Hitachi High-Tech Science Corporation) equipped with an oven for temperature and humidity control so that the longer side of the test piece was oriented in the measurement direction, and the thermomechanical analyzer was controlled to apply a stress of 20 mN. The test piece was brought to a steady state at 23°C and 50% RH in the oven for 1 hour, and the length of the sample piece was assigned to the point zero. In the oven, the temperature was maintained at 23°C, and the humidity was changed to 30% RH (dry condition) for 30 minutes and held constant for 20 minutes. Then, the humidity was changed to 90% RH (humid condition) for 30 minutes. This dry-humid cycle (from 30% RH to 90% RH ) was repeated, and the difference between the dimensional change ratio (%) in the 30% RH condition and that in the 90% RH condition at the 10th cycle was determined as the dry-humid dimensional change ratio (%).

The dry-humid dimensional change ratio is preferably not more than 7.0%, more preferably not more than 6.5%, and particularly preferably not more than 6.0%.

(4) Determination of Average Periodic Distance of Phase-Separated Structure by Small-Angle X-Ray Scattering (SAXS)

Two layers of a membrane sample were sealed in a silicone holder with windows made of Kapton film and mounted on a heating stage for small-angle X-ray scattering analysis. The analysis was performed in the atmosphere or in water under the following conditions. For the analysis in the atmosphere, the cell was heated to a temperature of 80°C in an environment of 25°C and 30% RH. For the analysis in water, the cell was filled with pure water and then heated to a temperature of 80°C.

Measurement: synchrotron radiation small-angle X-ray scattering
Synchrotron radiation facility: SPring-8 BL08B2
Wavelength: 0.10 nm
Beam diameter: 0.15 mm long and 0.40 mm wide (at sample location)
Camera length: about 6,000 mm
Measurement time: 60 seconds
Detector: Pilatus
Size of pixels: 172 μm square
Heating stage: heating stage manufactured by Linkam Scientific Instruments Measurement temperature: 80°C

Periodic peaks in the small-angle scattering profile were Fourier transformed based on the following equations to obtain a density correlation function K(z).

$$K(z) = \int_0^\infty I(q)q^2 \cos(qz)\, dq$$

$$K(0) = \int_0^\infty I(q)q^2\, dq$$

The average periodic distance of phase-separated structure was determined from the shape of K(z).

(5) Observation of Phase-Separated Structure by Transmission Electron Microscopy (TEM)

A test piece was immersed in an aqueous solution of lead acetate, as a stain, at a concentration of 2% by

weight and was left at 25°C for 72 hours. The stained test piece was removed from the stain and embedded in epoxy resin. Thin sections of the test piece of 80 nm in thickness were cut using an ultramicrotome at room temperature, and the obtained thin sections were collected on a Cu grid for TEM observation. The observation was performed at an accelerating voltage of 100 kV, and the images were taken at a magnification of ×20,000 or ×40,000. An HT7700 device (manufactured by Hitachi High-Tech Corporation) was used. A TEM image was fast Fourier transformed (FFT), and the resulting ring-like FFT pattern was used to measure the spatial frequency in the TD direction, and the average periodic distance of phase-separated structure was calculated from the resulting spatial frequency. The spatial frequency was a distance between the center of the image to the middle point of the thickness of the ring. DigitalMicrograph (produced by Gatan, Inc.) was used for the FFT and distance measurement.

(6) Observation of Phase-Separated Structure by Transmission Electron Microscopy (TEM) Tomography

Thin section samples prepared by the method described in the above section (5) were mounted on a collodion film and observed under the following conditions. Instrument: JEM 2100F field-emission scanning electron microscope (HRTEM) manufactured by JEOL

Image acquirement: DigitalMicrograph (manufactured by Gatan, Inc.)
System: marker method
Acceleration voltage: 200 kV
Magnification: x30,000
Tilt angle: +60° to -62°
Resolution of reconstruction: 0.71 nm/pixel

The marker method was used for the three-dimensional reconstruction. An Au colloidal particle deposited on the collodion film was used as a positioning marker for the three-dimensional reconstruction. A TEM image of the sample was taken every time the sample was tilted by 1° from +61° to -62° with the marker as a reference, and 124 TEM images obtained from the continuously-tilted image series were used for CT reconstruction to observe a three-dimensional phase-separated structure.

(7) Proton Conductivity

Diffusion layer electrodes (E-TEK ELAT GDL 140-HT) coated with an isopropanol-based carbon paste (G7711, manufactured by EM Japan Co., Ltd.) and cut to a size of 18 mm × 6 mm were attached to platinum electrodes of a cell. An electrolyte membrane cut to a size of 30 mm × 8 mm was inserted between the electrodes of the cell, and a pressure of 1 MPa was applied to hold the resulting cell in place, and the cell was then placed in a chamber of an MTS740. The proton resistance of the electrolyte membrane in the thickness direction was measured with the MTS740 film resistance measuring system (manufactured by Scribner Associates Inc.). The MTS740 stored the cell in a temperature-controlled chamber and supplied air to the chamber through a humidifier under the control of a mass flow controller. The cell was connected to a PSM1735 frequency response analyzer (manufactured by Newtons4th Ltd.). The resistance of the cell can be measured by sweeping the AC signal frequency from 1 MHz to 1 KHz.

The MTS740 and the PSM1735 can be connected to a personal computer and controlled by software. After setting the temperature in the chamber at 80°C, 90% RH air was introduced into the chamber and the chamber was held for 1 hour to sufficiently humidify the electrolyte membrane. Then, 20% RH air was introduced into the chamber to dry the electrolyte membrane, and the resistance was measured while 30% RH air was introduced into the chamber for 30 minutes. At this time, the frequency was swept from 1 MHz to 1 KHz. Then, the resistance was similarly measured while 80% RH air was introduced into the chamber for 30 minutes. The data of measured resistance was plotted on a Cole-Cole plot. Since the values in the frequency range near 1 MHz are affected by the inductance of a cable connecting the cell to the PSM1735, the value extracted at 200 kHz on the real axis of the plot, which is less affected by the inductance, was defined as the value of the resistance (Ω). The proton conductivity measured with 30% RH air introduced was defined as the proton conductivity at low humidity, and the proton conductivity measured with 80% RH air introduced was defined as the proton conductivity at high humidity, and the measured resistance value was used to calculate the proton conductivity using the following formula:

$$\text{Proton conductivity (mS/cm)} = 1 / (\text{resistance } (\Omega) \times \text{active area (cm}^2\text{)} / \text{sample thickness (cm)}).$$

The proton conductivity at low humidity is preferably not less than 0.90 mS/cm, more preferably not less than 1.00 mS/cm, and particularly preferably not less than 1.10 mS/cm. The proton conductivity at high humidity is preferably not less than 9.50 mS/cm, more preferably not less than 11.00 mS/cm, and particularly preferably not less than 12.00 mS/cm.

(8) Measurement of Heat of Crystallization by Differential Scanning Calorimetry (DSC)

A polymer electrolyte sample weighing 10 mg was predried at 110°C for 3 hours in a DSC apparatus and then heated to 200°C under the following conditions without removing the sample from the DSC apparatus to perform the temperature-modulated differential scanning calorimetry during the temperature rise.

DSC apparatus: DSC7000X (manufactured by Hitachi High-Tech Corporation)
Measurement temperature range: 30°C to 200°C
Temperature control: AC temperature control
Temperature rise rate: 2°C/min
Amplitude: ±3°C
Applied frequency: 0.02 Hz
Sample pan: aluminum crimp pan
Measuring and predrying atmosphere: nitrogen at 100 mL/min
Predry: 110°C, 3 hours

(9) Measurement of Crystallinity by Wide-Angle X-Ray Diffraction (XRD)

A polymer electrolyte material sample was mounted on a diffractometer, and X-ray diffractometry was performed under the following conditions.

X-ray diffraction apparatus: D8 ADVANCE manufactured by Broker Corporation
X-ray: Cu-Kα
X-ray output: 40 kV-40 mA
Optical system: concentration optical system
Scan speed: 2θ = 2/min
Scan method: 2θ-θ
Scanning range: 20 = 5 to 60°
Slit: divergence slit: 1/2°, receiving slit: 0.15 mm, scattering slit: 1/2°

The peaks of the components in the sample were distinguished by profile fitting to determine the diffraction angles and integrated intensities of the components, and the determined integrated intensities of crystalline peaks and amorphous halos were used to calculate crystallinity from the following formula:

$$\text{Crystallinity (\%)} = \text{(Sum of the integrated intensities of all crystalline peaks)} / \text{(sum of the integrated intensities of all crystalline peaks and amorphous halos)} \times 100.$$

The structures of the compounds obtained in the following synthesis examples 1 to 3 were confirmed by $^1$H-NMR. The purity of the compounds was quantitatively analyzed by capillary electrophoresis (for organic substances) and ion chromatography (for inorganic substances).

Synthesis Example 1 (Synthesis of 2,2-bis(4-hydroxyphenyl)-1,3-dioxolane (K-DHBP) represented by the following formula (G1))

In a 500-ml flask with a stirrer, a thermometer, and a distillation tube, 49.5 g of 4,4'-dihydroxybenzophenone, 134 g of ethylene glycol, 96.9 g of trimethyl orthoformate, and 0.50 g of *p*-toluenesulfonic monohydrate were placed and dissolved. Then, the resulting solution was incubated and stirred at a temperature of 78 to 82°C for 2 hours. Furthermore, the internal temperature was gradually raised to 120°C and maintained at 120°C until distillation of methyl formate, methanol, and trimethyl orthoformate was completely stopped. This reaction solution was cooled to room temperature and then diluted with ethyl acetate. The organic layer was washed with 100 ml of a 5% aqueous solution of potassium

carbonate, and separated, and the solvent was evaporated. A crystal was precipitated by adding 80 ml of dichloromethane to the resulting residue, filtered, and dried to give 52.0 g of 2,2-bis(4-hydroxyphenyl)-1,3-dioxolane. The purity was 99.9%.

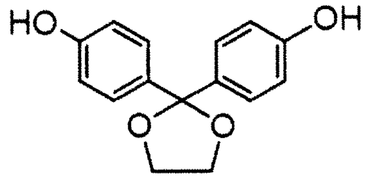

(G1)

Synthesis Example 2 (Synthesis of disodium-3,3'-disulfonate-4,4'-difluorobenzophenone represented by the following formula (G2))

In 150 mL of fuming sulfuric acid (50% $SO_3$) (a reagent from Wako Pure Chemical Corporation), 109.1 g of 4,4'-difluorobenzophenone (a reagent from Aldrich) was allowed to react at 100°C for 10 hours. The resulting solution was then added in portions to a large volume of water, and the resulting mixture was neutralized with NaOH, and then 200 g of common salt (NaCl) was added to the mixture to precipitate the synthesized product. The obtained precipitate was filtered, and the filtered product was recrystallized with an aqueous ethanol solution to give disodium-3,3'-disulfonate-4,4'-difluorobenzophenone. The purity was 99.3%.

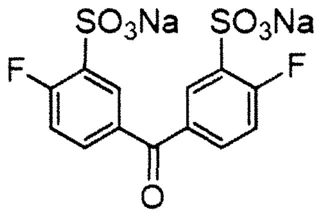

(G2)

Synthesis Example 3 (Synthesis of disodium diphenylsulfone-4,4'-difluoro-3,3'-disulfonate represented by the following formula (G3))

In 150 mL of fuming sulfuric acid (50% $SO_3$) (a reagent from Wako Pure Chemical Corporation), 109.1 g of 4,4-difluorodiphenyl sulfone (a reagent from Aldrich) was allowed to react at 100°C for 10 hours. The resulting solution was then added in portions to a large volume of water, and the resulting mixture was neutralized with NaOH, and then 200 g of common salt was added to the mixture to precipitate the synthesized product. The obtained precipitate was filtered, and the filtered product was recrystallized with an aqueous ethanol solution to give disodium diphenylsulfone-4,4'-difluoro-3,3'-disulfonate. The purity was 99.3%.

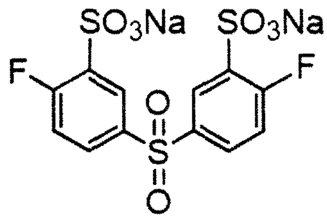

(G3)

Example 1

(Synthesis of non-ionic oligomer a1 represented by the following general formula (G4))

In a 2000-mL polymerizer made of SUS and equipped with a stirrer, a nitrogen inlet tube, and a Dean-Stark trap, 16.59 g of potassium carbonate (a reagent from Aldrich, 120 mmol), 25.83 g (100 mmol) of the K-DHBP obtained in Synthesis Example 1, and 21.38 g of 4,4'-difluorobenzophenone (a reagent from Aldrich, 98 mmol) were placed. After purging the polymerizer with nitrogen, 300 mL of N-methylpyrrolidone (NMP) and 100 mL of toluene were added to the reaction mixture, and the resulting mixture was dehydrated at 150°C and then heated to remove the toluene and held at 170°C for 3 hours to allow the polymerization to proceed. The resulting product was purified by reprecipitation in a large volume of methanol to give a terminally hydroxylated non-ionic oligomer a1. The terminally hydroxylated non-ionic oligomer a1 had a number-average molecular weight of 20,000. In a 500-mL three-necked flask equipped with a stirrer,

a nitrogen inlet tube, and a Dean-Stark trap, 1.1 g of potassium carbonate (a reagent from Aldrich, 8 mmol) and 20.0 g (1 mmol) of the terminally hydroxylated non-ionic oligomer a1 were placed. After purging the flask with nitrogen, 100 mL of NMP and 30 mL of toluene were added to the reaction mixture, and the resulting mixture was dehydrated at 100°C and then heated to remove the toluene. Furthermore, 1.1 g of hexafluorobenzene (a reagent from Aldrich, 6 mmol) was added to the reaction mixture, and the resulting mixture was held at 105°C for 12 hours to allow the reaction to proceed. The resulting product was purified by reprecipitation in a large volume of isopropyl alcohol to give a non-ionic oligomer a1 (termini: fluoro group) represented by the following formula (G4). The non-ionic oligomer a1 has a number-average molecular weight of 21,000.

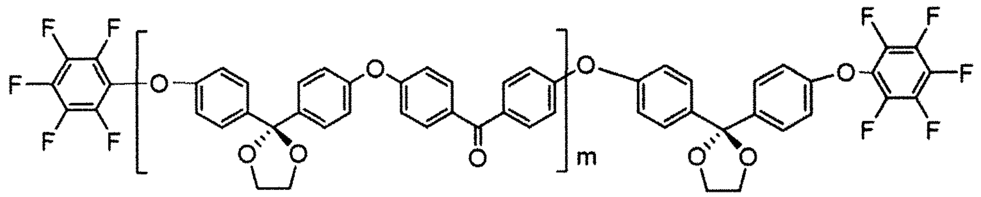

(G4)

(Synthesis of ionic oligomer a2 represented by the following formula (G5))

In a 2000-mL polymerizer made of SUS and equipped with a stirrer, a nitrogen inlet tube, and a Dean-Stark trap, 27.64 g of potassium carbonate (a reagent from Aldrich, 200 mmol), 12.91 g (50 mmol) of the K-DHBP obtained in Synthesis Example 1, 9.31 g of 4,4'-biphenol (a reagent from Aldrich, 50 mmol), 41.60 g (98.5 mmol) of the disodium-3,3'-disulfonate-4,4'-difluorobenzophenone obtained in Synthesis Example 2, and 26.40 g of 18-crown-6 (100 mmol, Wako Pure Chemical Company) were placed. After purging the polymerizer with nitrogen, 300 mL of NMP and 100 mL of toluene were added to the reaction mixture, and the resulting mixture was dehydrated at 150°C and then heated to remove the toluene and held at 170°C for 6 hours to allow the polymerization to proceed. The resulting product was purified by reprecipitation in a large volume of isopropyl alcohol to give an ionic oligomer a2 (termini: hydroxy group) represented by the following formula (G5). The ionic oligomer a2 had a number-average molecular weight of 45,000. In the formula (G5), M represents a hydrogen atom, Na, or K.

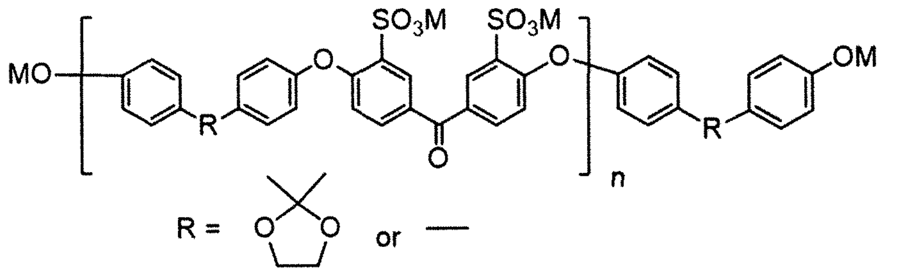

(G5)

(Synthesis of ionic oligomer a2' represented by the following formula (G6))

In a 2000-mL polymerizer made of SUS and equipped with a stirrer, a nitrogen inlet tube, and a Dean-Stark trap, 0.56 g of potassium carbonate (a reagent from Aldrich, 400 mmol) and 49.0 g of the ionic oligomer a2 were placed. After purging the polymerizer with nitrogen, 500 mL of NMP was added to the reaction mixture to dissolve the substances at 60°C, and 19.8 g of a solution of hexafluorobenzene in NMP (1 wt%) was then added to the resulting solution. The reaction was allowed to proceed at 80°C for 18 hours, yielding an NMP solution containing an ionic oligomer a2' (termini: OM) represented by the formula (G6). The ionic oligomer a2' had a number-average molecular weight of 90,000. In the formula (G6), M represents a hydrogen atom, Na, or K.

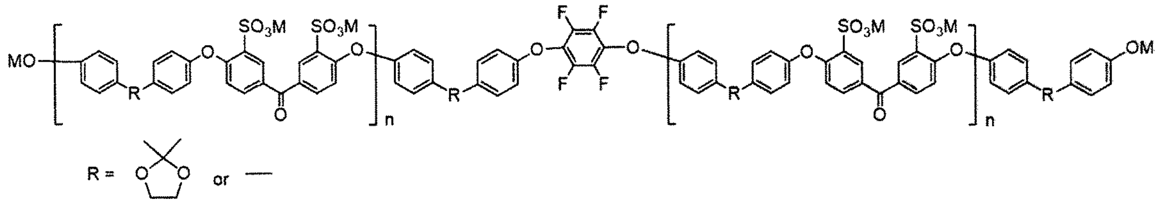

(G6)

(Synthesis of block copolymer b1 comprising oligomer a2' as ionic segment and oligomer a1 as non-ionic segment)

In a 2000-mL polymerizer made of SUS and equipped with a stirrer, a nitrogen inlet tube, and a Dean-Stark trap, 49.0 g of the ionic oligomer a2' and 7.65 g of the non-ionic oligomer a1 were placed, and NMP was added to the mixture so that the total concentration of the oligomers reached 7 wt%, and the resulting mixture was held at 105°C for 24 hours to allow the reaction to proceed. The resulting product was reprecipitated in a large volume of an isopropyl alcohol/NMP mixture (weight ratio: 2/1) and purified with a large volume of isopropyl alcohol to give a block copolymer b1. The block copolymer b1 had a number-average molecular weight of 170,000 and a weight-average molecular weight of 410,000.

A solution prepared by dissolving the obtained block copolymer b1 in NMP at a concentration of 20% by weight was filtered through a glass fiber filter under pressure, applied and spread over a glass substrate, and then dried at 100°C for 4 hours to obtain a membrane. This membrane was immersed in an aqueous solution of sulfuric acid at a concentration of 10% by mass at 80°C for 24 hours to undergo proton exchange and deprotection reaction, and then immersed in an excess volume of pure water and washed thoroughly for 24 hours to obtain a polymer electrolyte membrane A (thickness: 10 μm). A bicontinuous phase-separated structure was observed by TEM and TEM tomography, indicating the formation of continuous phases by both hydrophilic domains with ionic groups and hydrophobic domains without ionic groups. DSC analysis revealed a crystallization peak and a heat of crystallization of 15.8 J/g. In addition, wide-angle X-ray diffraction analysis showed no crystalline peak (crystallinity: 0%).

Example 2

(Synthesis of block copolymer b2 comprising oligomer a2' as ionic segment and oligomer a1 as non-ionic segment)

A block copolymer b2 was prepared in the same manner as in Example 1, except that the amount of the non-ionic oligomer a1 used was changed to 5.4 g. The block copolymer b2 had a number-average molecular weight of 180,000 and a weight-average molecular weight of 430,000.

A polymer electrolyte membrane B (thickness: 11 μm) was prepared in the same manner as in Example 1, except that the block copolymer b2 was used instead of the block copolymer b1. A bicontinuous phase-separated structure was observed by TEM and TEM tomography, indicating the formation of continuous phases by both hydrophilic domains with ionic groups and hydrophobic domains without ionic groups. DSC analysis revealed a crystallization peak and a heat of crystallization of 13.2 J/g. In addition, wide-angle X-ray diffraction analysis showed no crystalline peak (crystallinity: 0%).

Example 3

(Synthesis of non-ionic oligomer a3 represented by the formula (G4))

A terminally hydroxylated oligomer a3 was prepared in the same manner as in the synthesis of the terminally hydroxylated oligomer a1, except that the amount of 4,4'-difluorobenzophenone used was changed to 21.45 g. The terminally hydroxylated oligomer a3 had a number-average molecular weight of 25,000.

A non-ionic oligomer a3 (termini: fluoro group) represented by the formula (G4) was prepared in the same manner as in the synthesis of the oligomer a1, except that 25.0 g of the terminally hydroxylated oligomer a3 was used instead of the terminally hydroxylated oligomer a1. The non-ionic oligomer a3 had a number-average molecular weight of 26,000.

(Synthesis of block copolymer b3 comprising oligomer a2' as ionic segment and oligomer a3 as non-ionic segment)

A block copolymer b3 was prepared in the same manner as the synthesis of the block copolymer b1, except that 12.3 g of the non-ionic oligomer a3 was used instead of 7.65 g of the non-ionic oligomer a1. The block copolymer b3 had a number-average molecular weight of 160,000 and a weight-average molecular weight of 390,000.

A polymer electrolyte membrane C (thickness: 10 μm) was prepared in the same manner as in Example 1, except that the block copolymer b3 was used instead of the block copolymer b1. A bicontinuous phase-separated structure was observed by TEM and TEM tomography, indicating the formation of continuous phases by both hydrophilic domains with ionic groups and hydrophobic domains without ionic groups. DSC analysis revealed a crystallization peak and a heat of crystallization of 22.1 J/g. In addition, wide-angle X-ray diffraction analysis showed no crystalline peak (crystallinity: 0%).

Example 4

(Synthesis of ionic oligomer a4 represented by the formula (G5))

The ionic oligomer a4 was prepared in the same manner as in the synthesis of the ionic oligomer a2, except that the amount of disodium-3,3'-disulfonate-4,4'-difluorobenzophenone used was changed to 41.38 g (98.0 mmol). The ionic oligomer a4 had a number-average molecular weight of 35,000.

(Synthesis of ionic oligomer a4' represented by the general formula (G6))

An NMP solution containing an ionic oligomer a4' (termini: OM) represented by the formula (G6) was prepared in the same manner as in the synthesis of the ionic oligomer a2', except that 37.16 g of the ionic oligomer a4 was used instead of 49.0 g of the ionic oligomer a2, and the volume of NMP used was changed to 400 mL, and the amount of the solution of hexafluorobenzene in NMP (1 wt%) used was changed to 15.3 g. The oligomer a4' had a number-average molecular weight of 70,000.

(Synthesis of block copolymer b4 comprising oligomer a4' as ionic segment and oligomer a1 as non-ionic segment)

In a 2000-mL polymerizer made of SUS and equipped with a stirrer, a nitrogen inlet tube, and a Dean-Stark trap, a block copolymer b4 was prepared in the same manner as the synthesis of the block copolymer b1, except that 37.16 g of the ionic oligomer a4' was used instead of 49.0 g of the ionic oligomer a2', and the amount of the non-ionic oligomer a1 used was changed to 5.80 g. The block copolymer b4 had a number-average molecular weight of 190,000 and a weight-average molecular weight of 440,000.

A polymer electrolyte membrane D (thickness: 10 μm) was prepared in the same manner as in Example 1, except that the block copolymer b4 was used instead of the block copolymer b 1. A bicontinuous phase-separated structure was observed by TEM and TEM tomography, indicating the formation of continuous phases by both hydrophilic domains with ionic groups and hydrophobic domains without ionic groups. DSC analysis revealed a crystallization peak and a heat of crystallization of 16.6 J/g. In addition, wide-angle X-ray diffraction analysis showed no crystalline peak (crystallinity: 0%).

Example 5

(Synthesis of non-ionic oligomer a5 represented by the general formula (G4))

A terminally hydroxylated non-ionic oligomer a5 was prepared in the same manner as in the synthesis of the terminally hydroxylated non-ionic oligomer a1, except that the amount of 4,4'-difluorobenzophenone used was changed to 21.27 g. The terminally hydroxylated non-ionic oligomer a5 had a number-average molecular weight of 16,000.

A non-ionic oligomer a5 (termini: fluoro group) represented by the formula (G4) was prepared in the same manner as in the synthesis of the non-ionic oligomer a1, except that 16.0 g of the terminally hydroxylated non-ionic oligomer a5 was used instead of 20.0 g of the terminally hydroxylated non-ionic oligomer a1. The non-ionic oligomer a5 had a number-average molecular weight of 17,000.

(Synthesis of ionic oligomer a6 represented by the formula (G5))

In a 2000-mL polymerizer made of SUS and equipped with a stirrer, a nitrogen inlet tube, and a Dean-Stark trap, 27.64 g of potassium carbonate (a reagent from Aldrich, 200 mmol), 12.91 g (50 mmol) of the K-DHBP obtained in Synthesis Example 1, 9.31 g of 4,4'-biphenol (a reagent from Aldrich, 50 mmol), and 41.85 g (99.1 mmol) of the disodium-3,3'-disulfonate-4,4'-difluorobenzophenone obtained in Synthesis Example 2 were placed. After purging the polymerizer with nitrogen, 300 mL of dimethyl sulfoxide (DMSO) and 100 mL of toluene were added to the reaction mixture, and the resulting mixture was dehydrated at 133°C and then heated to remove the toluene and held at 150°C for 2 hours to allow the polymerization to proceed, and then heated to 155°C and held for another 1 hour to allow the polymerization to proceed. The resulting product was purified by reprecipitation in a large volume of isopropyl alcohol to give an ionic oligomer a6 (termini: hydroxy group) represented by the formula (G5). The ionic oligomer a6 had a number-average molecular weight of 56,000.

(Synthesis of block copolymer b5 comprising oligomer a6 as ionic segment and oligomer a7 as non-ionic segment)

A block copolymer b5 was prepared in the same manner as the synthesis of the block copolymer b1, except

that 32.79 g of the ionic oligomer a6 was used instead of 49.0 g of the ionic oligomer a2', and 8.19 g of the non-ionic oligomer a5 was used instead of 7.65 g of the non-ionic oligomer a1. The block copolymer b5 had a number-average molecular weight of 140,000 and a weight-average molecular weight of 360,000.

A polymer electrolyte membrane E (thickness: 12 μm) was prepared in the same manner as in Example 1, except that the block copolymer b5 was used instead of the block copolymer b1. A bicontinuous phase-separated structure was observed by TEM and TEM tomography, indicating the formation of continuous phases by both hydrophilic domains with ionic groups and hydrophobic domains without ionic groups. DSC analysis revealed a crystallization peak and a heat of crystallization of 21.1 J/g. In addition, wide-angle X-ray diffraction analysis showed no crystalline peak (crystallinity: 0%).

Example 6

(Synthesis of non-ionic oligomer a7 represented by the general formula (G7))

A terminally hydroxylated non-ionic oligomer a7 was prepared in the same manner as in the synthesis of the terminally hydroxylated non-ionic oligomer a1, except that 23.65 g of 4,4-difluorodiphenyl sulfone was used instead of 4,4'-difluorobenzophenone. The terminally hydroxylated non-ionic oligomer a7 had a number-average molecular weight of 10,000.

A non-ionic oligomer a7 (termini: fluoro group) represented by the formula (G7) was prepared in the same manner as in the synthesis of the non-ionic oligomer a1, except that 10.0 g of the terminally hydroxylated non-ionic oligomer a7 was used instead of 20.0 g of the terminally hydroxylated non-ionic oligomer a1. The non-ionic oligomer a7 had a number-average molecular weight of 11,000.

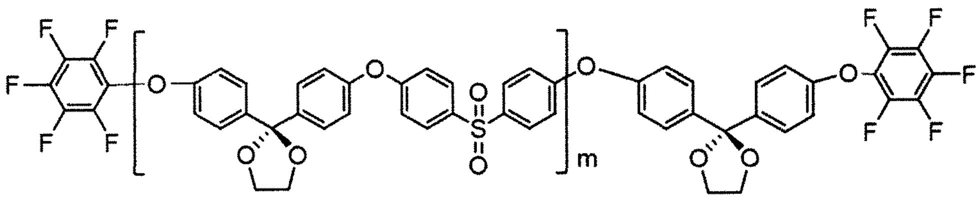
(G7)

(Synthesis of ionic group oligomer a8 represented by the formula (G8))

In a 2000-mL polymerizer made of SUS and equipped with a stirrer, a nitrogen inlet tube, and a Dean-Stark trap, 27.6 g of potassium carbonate (a reagent from Aldrich, 200 mmol), 12.9 g (50 mmol) of the K-DHBP obtained in Synthesis Example 1, 9.3 g of 4,4'-biphenol (a reagent from Aldrich, 50 mmol), and 45.12 g (99.1 mmol) of the disodium diphenylsulfone-4,4'-difluoro-3,3'-disulfonate obtained in Synthesis Example 3 were placed. After purging the polymerizer with nitrogen, 300 mL of DMSO and 100 mL of toluene were added to the reaction mixture, and the resulting mixture was dehydrated at 130°C and then heated to remove the toluene and held at 155°C for 3 hours to allow the polymerization to proceed. The resulting product was purified by reprecipitation in a large volume of isopropyl alcohol to give an ionic oligomer a8 (termini: hydroxy group) represented by the formula (G8). The ionic oligomer a8 had a number-average molecular weight of 57,000.

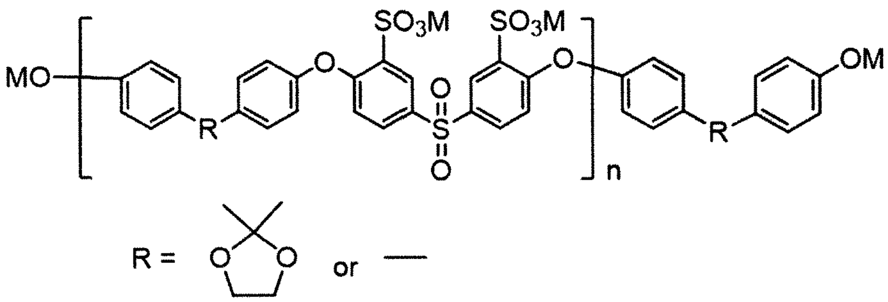
(G8)

(Synthesis of block copolymer b6 comprising oligomer a8 as ionic segment and oligomer a7 as non-ionic segment)

A block copolymer b10 was prepared in the same manner as the synthesis of the block copolymer b1, except that 65.82 g of the ionic oligomer a8 was used instead of 49.0 g of the ionic oligomer a2', and 10.28 g of the non-ionic

oligomer a7 was used instead of 7.65 g of the non-ionic oligomer a1. The block copolymer b6 had a number-average molecular weight of 110,000 and a weight-average molecular weight of 280,000.

A polymer electrolyte membrane F (thickness: 10 μm) was prepared in the same manner as in Example 1, except that the block copolymer b6 was used instead of the block copolymer b1. A bicontinuous phase-separated structure was observed by TEM and TEM tomography, indicating the formation of continuous phases by both hydrophilic domains with ionic groups and hydrophobic domains without ionic groups. DSC analysis revealed no crystallization peak (heat of crystallization: 0 J/g). In addition, wide-angle X-ray diffraction analysis showed no crystalline peak (crystallinity: 0%).

Example 7

(Synthesis of ionic oligomer precursor a9 represented by the following general formula (G9))

In a 2000-mL polymerizer made of SUS and equipped with a stirrer, a nitrogen inlet tube, and a Dean-Stark trap, 200 ml of dry N,N-dimethylacetamide (DMAc), 16.9 g (42 mmol) of neopentyl 3-(2,5-dichlorobenzoyl)benzenesulfonate, and 0.09 g (0.7 mmol) of 4-chlorophenol were placed, and the resulting mixture was stirred at 80°C for 2 hours under a nitrogen atmosphere. Then, 30 g (109 mmol) of bis(1,5-cyclooctadiene)nickel was added to the reaction mixture, and the resulting mixture was stirred for 4 hours. The reaction mixture was diluted with 300 mL of dry DMAc, and 1 L of acetone was added to the reaction mixture, and the resulting coagulated product was dried under vacuum at 80°C to obtain an ionic oligomer precursor a9 (termini: hydroxy group) represented by the following formula (G9). The ionic oligomer precursor had a number-average molecular weight of 22,000.

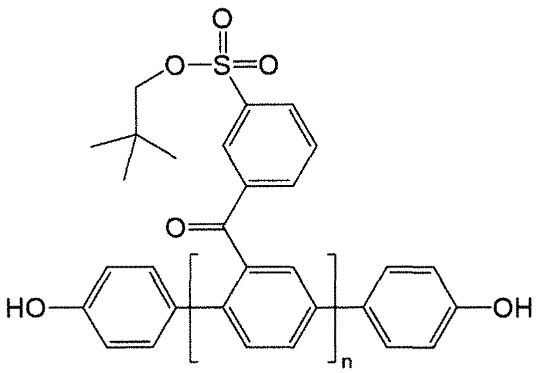

(G9)

(Synthesis of ionic oligomer precursor a9' represented by the following formula (G10))

In a 2000-mL polymerizer made of SUS and equipped with a stirrer, a nitrogen inlet tube, and a Dean-Stark trap, 0.56 g of potassium carbonate (a reagent from Aldrich, 400 mmol) and 11.1 g of an ionic oligomer a10 were placed. After purging the polymerizer with nitrogen, 200 mL of dry DMAc was added to the reaction mixture to dissolve the substances at 60°C, and 30.6 g of a solution of hexafluorobenzene in DMAc (1 wt%) was then added to the resulting solution. The reaction was allowed to proceed at 80°C for 24 hours, yielding a DMAc solution containing an ionic oligomer precursor a9' (termini: OM) represented by the following formula (G10). The ionic oligomer precursor a9' had a number-average molecular weight of 67,000. In the formula (G10), M represents a hydrogen atom, Na, or K.

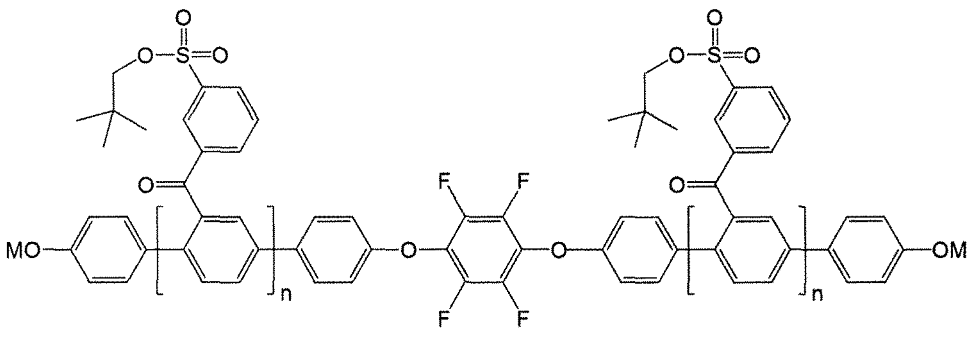

(G10)

(Synthesis of non-ionic oligomer a10 represented by the following general formula (G11))

In a 2000-mL polymerizer made of SUS and equipped with a stirrer, a nitrogen inlet tube, and a Dean-Stark trap, 200 ml of dry NMP, 10.08 g (40 mmol) of 2,5-dichlorobenzophenone, and 0.12 g (0.9 mmol) of 4-chlorophenol were placed, and the resulting mixture was stirred at 80°C for 2 hours under a nitrogen atmosphere. Then, 30 g (109 mmol) of bis(1,5-cyclooctadiene)nickel was added to the reaction mixture, and the resulting mixture was stirred for 4 hours. The reaction mixture was diluted with 300 mL of dry NMP and precipitated in 1 L of a 10 wt% aqueous solution of hydrochloric acid, and the resulting precipitate was then dried under vacuum at 80°C to obtain a terminally hydroxylated non-ionic oligomer a10 represented by the following formula (G11). The terminally hydroxylated non-ionic oligomer had a number-average molecular weight of 9,000.

A non-ionic oligomer a10 (termini: fluoro group) represented by the following formula (G11) was prepared in the same manner as in the synthesis of the non-ionic oligomer a1, except that 9.0 g (1 mmol) of the terminally hydroxylated non-ionic oligomer a10 was used instead of 20.0 g of the terminally hydroxylated non-ionic oligomer a1. The non-ionic oligomer a10 had a number-average molecular weight of 10,000.

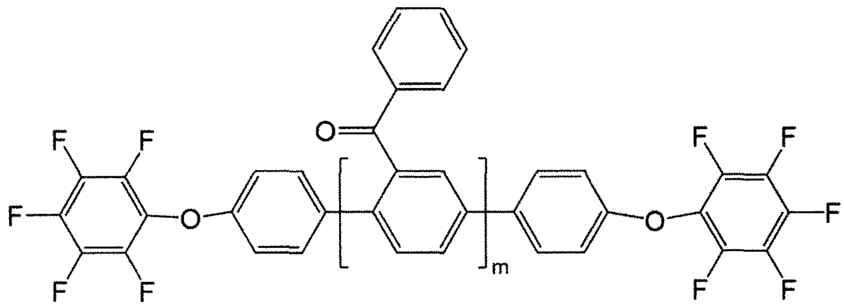
(G11)

(Synthesis of block copolymer b7 comprising ionic oligomer a9" as ionic segment and oligomer a 10 as non-ionic segment)

In a 2000-mL polymerizer made of SUS and equipped with a stirrer, a nitrogen inlet tube, and a Dean-Stark trap, 11.1 g of the ionic oligomer precursor a9' and 5.71 g of the non-ionic oligomer a10 were placed, and DMAc was added to the mixture so that the total concentration of the oligomers reached 7 wt%, and the resulting mixture was held at 105°C for 24 hours to allow the reaction to proceed. The polymerization reaction solution was diluted with 500 ml of DMAc, stirred for 30 minutes, and filtered using celite as a filtration aid.

The filtrate was concentrated by an evaporator, and 21.9 g (0.253 mol) of lithium bromide was added to the residue, and the resulting mixture was held at an inner temperature of 110°C for 7 hours to allow the reaction to proceed under a nitrogen atmosphere. After completion of the reaction, the reaction mixture was cooled to room temperature and poured into 3 L of acetone to induce coagulation. The coagulated product was collected by filtration, dried in air, and then ground with a mixer, and the resulting product was stirred in 1500 ml of 1 N hydrochloric acid for washing. The product was filtered and then washed with ion exchange water until the wash water reached pH 5 or higher. The product was then dried at 80°C overnight to obtain a block copolymer b7 comprising an ionic oligomer a9" represented by the following formula (G12). From the structural formula of the formula (G12) and the number-average molecular weight, the ionic oligomer a9" is calculated to have a number-average molecular weight of 53,000. The block copolymer b7 had a number-average molecular weight of 90,000 and a weight-average molecular weight of 210,000. In the formula (G12), the symbol * represents an attachment point for a non-ionic segment.

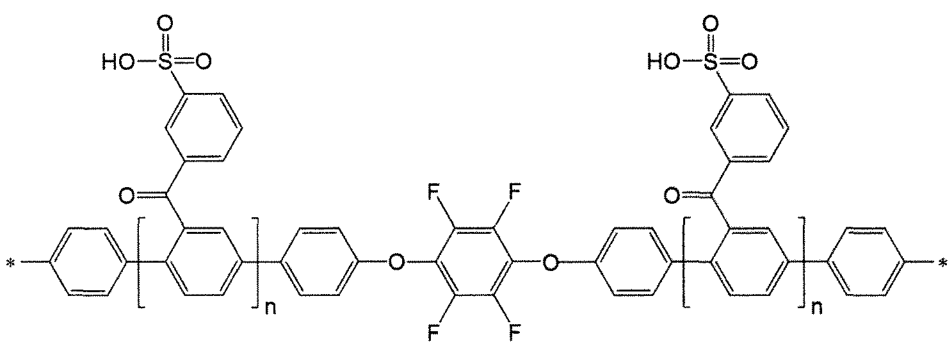
(G12)

The block copolymer b11 was dissolved in a mixed solvent of NMP and methanol in a ratio of 30/70 (% by

mass) at a ratio of 0.1 g of copolymer per gram of solvent. The resulting solution was filtered through a glass fiber filter under pressure, applied and spread over a glass substrate, and then dried at 100°C for 4 hours to obtain a membrane. This membrane was immersed in an aqueous solution of sulfuric acid at a concentration of 10% by mass at 80°C for 24 hours, and then immersed in an excess volume of pure water and washed thoroughly for 24 hours to obtain a polymer electrolyte membrane G (thickness: 10 μm). A bicontinuous phase-separated structure was observed by TEM and TEM tomography, indicating the formation of continuous phases by both hydrophilic domains with ionic groups and hydrophobic domains without ionic groups. DSC analysis revealed no crystallization peak. In addition, wide-angle X-ray diffraction analysis showed a crystalline peak and a crystallinity of 10.4%.

Comparative Example 1

(Synthesis of non-ionic oligomer a11 represented by the general formula (G4))

A terminally hydroxylated non-ionic oligomer a11 was prepared in the same manner as in the synthesis of the terminally hydroxylated non-ionic oligomer a1, except that the amount of 4,4'-difluorobenzophenone used was changed to 20.84 g. The terminally hydroxylated non-ionic oligomer a9 had a number-average molecular weight of 9,000.

A non-ionic oligomer a11 (termini: fluoro group) represented by the formula (G4) was prepared in the same manner as in the synthesis of the non-ionic oligomer a1, except that 9.0 g of the terminally hydroxylated non-ionic oligomer a11 was used instead of 20.0 g of the terminally hydroxylated non-ionic oligomer a1. The non-ionic oligomer a11 had a number-average molecular weight of 10,000.

(Synthesis of ionic oligomer a12 represented by the general formula (G5))

In a 2000-mL polymerizer made of SUS and equipped with a stirrer, a nitrogen inlet tube, and a Dean-Stark trap, 27.64 g of potassium carbonate (a reagent from Aldrich, 200 mmol), 12.91 g (50 mmol) of the K-DHBP obtained in Synthesis Example 1, 9.31 g of 4,4'-biphenol (a reagent from Aldrich, 50 mmol), 41.47 g (98.2 mmol) of the disodium-3,3'-disulfonate-4,4'-difluorobenzophenone obtained in Synthesis Example 2, and 26.40 g of 18-crown-6 (100 mmol, Wako Pure Chemical Company) were placed. After purging the polymerizer with nitrogen, 300 mL of NMP and 100 mL of toluene were added to the reaction mixture, and the resulting mixture was dehydrated at 150°C and then heated to remove the toluene and held at 170°C for 6 hours to allow the polymerization to proceed. The resulting product was purified by reprecipitation in a large volume of isopropyl alcohol to give an ionic oligomer a12 (termini: hydroxy group) represented by the formula (G5). The ionic oligomer a12 had a number-average molecular weight of 42,000.

(Synthesis of block copolymer b8 comprising oligomer a12 as ionic segment and oligomer a11 as non-ionic segment)

A block copolymer b8 was prepared in the same manner as the synthesis of the block copolymer b1, except that 43.57 g of the ionic group oligomer a12 was used instead of 49.0 g of the ionic oligomer a2', and 10.89 g of the non-ionic oligomer a11 was used instead of 7.65 g of the non-ionic oligomer a1. The block copolymer b8 had a number-average molecular weight of 140,000 and a weight-average molecular weight of 400,000.

A polymer electrolyte membrane H (thickness: 10 μm) was prepared in the same manner as in Example 1, except that the block copolymer b8 was used instead of the block copolymer b1. A bicontinuous phase-separated structure was observed by TEM and TEM tomography, indicating the formation of continuous phases by both hydrophilic domains with ionic groups and hydrophobic domains without ionic groups. DSC analysis revealed a crystallization peak and a heat of crystallization of 15.1 J/g. In addition, wide-angle X-ray diffraction analysis showed no crystalline peak (crystallinity: 0%).

Comparative Example 2

(Synthesis of non-ionic oligomer a13 represented by the formula (G4))

A terminally hydroxylated non-ionic oligomer a15 was prepared in the same manner as in the synthesis of the terminally hydroxylated non-ionic oligomer a1, except that the amount of 4,4'-difluorobenzophenone used was changed to 20.18 g. The terminally hydroxylated non-ionic oligomer a15 had a number-average molecular weight of 5,000.

In a 500-mL three-necked flask equipped with a stirrer, a nitrogen inlet tube, and a Dean-Stark trap, 2.2 g of potassium carbonate (a reagent from Aldrich, 16 mmol) and 10.0 g of a terminally hydroxylated non-ionic oligomer a13 were placed. After purging the flask with nitrogen, 100 mL of NMP and 30 mL of toluene were added to the reaction mixture, and the resulting mixture was dehydrated at 100°C and then heated to remove the toluene. Furthermore, 2.2 g of hexafluorobenzene (a reagent from Aldrich, 12 mmol) was added to the reaction mixture, and the resulting mixture

was held at 105°C for 12 hours to allow the reaction to proceed. The resulting product was purified by reprecipitation in a large volume of isopropyl alcohol to give a non-ionic oligomer a13 (termini: fluoro group) represented by the formula (G4). The non-ionic oligomer a13 had a number-average molecular weight of 6,000.

(Synthesis of block copolymer b9 comprising oligomer a12 as ionic segment and oligomer a13 as non-ionic segment)

A block copolymer b9 was prepared in the same manner as the synthesis of the block copolymer b8, except that 6.81 g of the non-ionic oligomer a13 was used instead of 10.89 g of the non-ionic oligomer a11. The block copolymer b9 had a number-average molecular weight of 130,000 and a weight-average molecular weight of 400,000.

A polymer electrolyte membrane I (thickness: 10 μm) was prepared in the same manner as in Example 1, except that the block copolymer b9 was used instead of the block copolymer b 1. A bicontinuous phase-separated structure was observed by TEM and TEM tomography, indicating the formation of continuous phases by both hydrophilic domains with ionic groups and hydrophobic domains without ionic groups. However, some of the continuous structures were observed to be interrupted. DSC analysis revealed a crystallization peak and a heat of crystallization of 6.4 J/g. In addition, wide-angle X-ray diffraction analysis showed no crystalline peak (crystallinity: 0%).

Comparative Example 3

(Synthesis of non-ionic oligomer a14 represented by the formula (G4))

A terminally hydroxylated non-ionic oligomer a14 was prepared in the same manner as in the synthesis of the terminally hydroxylated non-ionic oligomer a1, except that the amount of 4,4'-difluorobenzophenone used was changed to 19.99 g. The terminally hydroxylated non-ionic oligomer a14 had a number-average molecular weight of 4,000.

A non-ionic oligomer a14 (termini: fluoro group) represented by the formula (G4) was prepared in the same manner as in the synthesis of the non-ionic oligomer a13, except that 8.0 g of the terminally hydroxylated non-ionic oligomer a14 was used instead of 10.0 g of the terminally hydroxylated non-ionic oligomer a13. The ionic oligomer a14 had a number-average molecular weight of 5,000.

(Synthesis of block copolymer b10 comprising oligomer a12 as ionic segment and oligomer a14 as non-ionic segment)

A block copolymer b10 was prepared in the same manner as in the synthesis of the block copolymer b9, except that 4.84 g of the non-ionic oligomer a14 was used instead of 6.81 g of the non-ionic oligomer a13. The block copolymer b10 had a number-average molecular weight of 130,000 and a weight-average molecular weight of 400,000.

A polymer electrolyte membrane J (thickness: 10 μm) was prepared in the same manner as in Example 1, except that the block copolymer b10 was used instead of the block copolymer b1. A bicontinuous phase-separated structure was observed by TEM and TEM tomography, indicating the formation of continuous phases by both hydrophilic domains with ionic groups and hydrophobic domains without ionic groups. However, some of the continuous structures were observed to be interrupted. DSC analysis revealed a crystallization peak and a heat of crystallization of 2.9 J/g. In addition, wide-angle X-ray diffraction analysis showed no crystalline peak (crystallinity: 0%).

Comparative Example 4

(Synthesis of ionic oligomer a15 represented by the following general formula (G8))

An ionic oligomer a15 (termini: hydroxy group) represented by the formula (G8) was prepared in the same manner as in the synthesis of the ionic oligomer a2, except that 44.94 g (98.1 mmol) of the disodium diphenylsulfone-4,4'-difluoro-3,3'-disulfonate obtained in Synthesis Example 3 was used instead of 41.60 g of the disodium-3,3'-disulfonate-4,4'-difluorobenzophenone. The ionic oligomer a15 had a number-average molecular weight of 41,000. In the formula (G8), M represents a hydrogen atom, Na, or K.

(Synthesis of block copolymer b 11 comprising oligomer a15 as ionic segment and oligomer a7 as non-ionic segment)

In a 2000-mL polymerizer made of SUS and equipped with a stirrer, a nitrogen inlet tube, and a Dean-Stark trap, 45.76 g of the ionic oligomer a15 and 8.93 g of the non-ionic oligomer a7 were placed, and NMP was added to the mixture so that the total concentration of the oligomers reached 7 wt%, and the resulting mixture was held at 105°C for 24 hours to allow the reaction to proceed. The resulting product was reprecipitated in a large volume of an isopropyl alcohol/NMP mixture (weight ratio: 2/1) and purified with a large volume of isopropyl alcohol to give a block copolymer b18. The block copolymer b11 had a number-average molecular weight of 120,000 and a weight-average molecular

weight of 290,000.

A polymer electrolyte membrane K (thickness: 10 μm) was prepared in the same manner as in Example 1, except that the block copolymer b11 was used instead of the block copolymer b1. A bicontinuous phase-separated structure was observed by TEM and TEM tomography, indicating the formation of continuous phases by both hydrophilic domains with ionic groups and hydrophobic domains without ionic groups. DSC analysis revealed no crystallization peak (heat of crystallization: 0 J/g). In addition, wide-angle X-ray diffraction analysis showed no crystalline peak (crystallinity: 0%).

Comparative Example 5

(Synthesis of non-ionic oligomer a16 represented by the following general formula (G13))

A non-ionic oligomer a16 (termini: fluoro group) represented by the formula (G13) was prepared in the same manner as in the synthesis of the terminally hydroxylated non-ionic oligomer a1, except that the amount of K-DHBP used was changed to 25.22 g, and the amount of 4,4'-difluorobenzophenone used was changed to 21.82 g. The ionic oligomer a16 had a number-average molecular weight of 17,000.

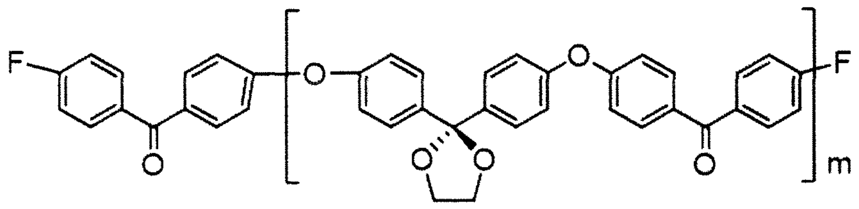

(G13)

(Synthesis of block copolymer b12 comprising oligomer a12 as ionic segment and oligomer a16 as non-ionic segment)

In a 2000-mL polymerizer made of SUS and equipped with a stirrer, a nitrogen inlet tube, and a Dean-Stark trap, 43.57 g of the ionic oligomer a12 and 10.89 g of the non-ionic oligomer a16 were placed, and NMP was added to the mixture so that the total concentration of the oligomers reached 21 wt%, and the resulting mixture was held at 180°C for 24 hours to allow the reaction to proceed. The resulting product was reprecipitated in a large volume of an isopropyl alcohol/NMP mixture (weight ratio: 2/1) and purified with a large volume of isopropyl alcohol to give a block copolymer b12. The block copolymer b12 had a number-average molecular weight of 90,000 and a weight-average molecular weight of 210,000.

A polymer electrolyte membrane L (thickness: 10 μm) was prepared in the same manner as in Example 1, except that the block copolymer b12 was used instead of the block copolymer b1. A sea-island phase-separated structure was observed by TEM and TEM tomography. DSC analysis revealed a crystallization peak and a heat of crystallization of 3.6 J/g. In addition, wide-angle X-ray diffraction analysis showed no crystalline peak (crystallinity: 0%).

Comparative Example 6

(Synthesis of non-ionic oligomer a17 represented by the formula (G4))

A terminally hydroxylated non-ionic oligomer a17 was prepared in the same manner as in the synthesis of the terminally hydroxylated non-ionic oligomer a1, except that the amount of 4,4'-difluorobenzophenone used was changed to 19.81 g. The terminally hydroxylated non-ionic oligomer a17 had a number-average molecular weight of 3,000.

A non-ionic oligomer a17 (termini: fluoro group) represented by the formula (G4) was prepared in the same manner as in the synthesis of the non-ionic oligomer a13, except that 6.0 g of the terminally hydroxylated non-ionic oligomer a 17 was used instead of 10.0 g of the terminally hydroxylated non-ionic oligomer a13. The ionic oligomer a17 had a number-average molecular weight of 4,000.

(Synthesis of block copolymer b13 comprising oligomer a12 as ionic segment and oligomer a17 as non-ionic segment)

A block copolymer b13 was prepared in the same manner as in the synthesis of the block copolymer b9, except that 3.63 g of the non-ionic oligomer a17 was used instead of 6.81 g of the non-ionic oligomer a13. The block copolymer b13 had a number-average molecular weight of 90,000 and a weight-average molecular weight of 220,000.

A polymer electrolyte membrane N (thickness: 10 μm) was prepared in the same manner as in Example 1, except that the block copolymer b13 was used instead of the block copolymer b1. A bicontinuous phase-separated

structure was observed by TEM and TEM tomography, indicating the formation of continuous phases by both hydrophilic domains with ionic groups and hydrophobic domains without ionic groups. However, some of the continuous structures were observed to be interrupted. DSC analysis revealed a crystallization peak and a heat of crystallization of 0.5 J/g. In addition, wide-angle X-ray diffraction analysis showed no crystalline peak (crystallinity: 0%).

Comparative Example 7

(Synthesis of non-ionic oligomer a18 represented by the formula (G4))

A terminally hydroxylated non-ionic oligomer a18 was prepared in the same manner as in the synthesis of the terminally hydroxylated non-ionic oligomer a1, except that the amount of 4,4'-difluorobenzophenone used was changed to 21.49 g. The terminally hydroxylated non-ionic oligomer a18 had a number-average molecular weight of 27,000.

A non-ionic oligomer a18 (termini: fluoro group) represented by the formula (G4) was prepared in the same manner as in the synthesis of the oligomer a1, except that 27.0 g of the terminally hydroxylated oligomer a18 was used instead of the terminally hydroxylated oligomer a1. The non-ionic oligomer a18 had a number-average molecular weight of 28,000.

(Synthesis of block copolymer b14 comprising oligomer a12 as ionic segment and oligomer a18 as non-ionic segment)

A block copolymer b13 was prepared in the same manner as in the synthesis of the block copolymer b8, except that 14.52 g of the non-ionic oligomer a17 was used instead of 10.89 g of the non-ionic oligomer a11. The block copolymer b14 had a number-average molecular weight of 70,000 and a weight-average molecular weight of 200,000.

In a solution prepared by dissolving the obtained block copolymer b14 in NMP at a concentration of 20% by weight, some undissolved gel-like particles were observed due to the low solubility. The solution was filtered through a glass fiber filter under pressure, applied and spread over a glass substrate, and then dried at 100°C for 4 hours to obtain a membrane. The resulting membrane was observed to have defects, probably due to the undissolved gel-like particles that remained to be removed. This membrane was immersed in an aqueous solution of sulfuric acid at a concentration of 10% by mass at 80°C for 24 hours to undergo proton exchange and deprotection reaction, and then immersed in an excess volume of pure water and washed thoroughly for 24 hours to obtain a polymer electrolyte membrane M (thickness: 13 μm). A bicontinuous phase-separated structure was observed by TEM and TEM tomography, indicating the formation of continuous phases by both hydrophilic domains with ionic groups and hydrophobic domains without ionic groups. However, some of the continuous structures were observed to be interrupted, indicating the presence of a heterogeneous structure. DSC analysis revealed a crystallization peak and a heat of crystallization of 28.4 J/g. In addition, wide-angle X-ray diffraction analysis showed no crystalline peak (crystallinity: 0%).

Comparative Example 8

(Synthesis of non-ionic oligomer a19 represented by the following general formula (G14))

In a 1,000-mL three-necked flask equipped with a stirrer, a nitrogen inlet tube, and a Dean-Stark trap, 16.59 g of potassium carbonate (a reagent from Aldrich, 120 mmol), 25.8 g (100 mmol) of the K-DHBP obtained in Synthesis Example 1, and 21.4 g of 4,4'-difluorobenzophenone (a reagent from Aldrich, 98 mmol) were placed. After purging the three-necked flask with nitrogen, 300 mL of N-methylpyrrolidone (NMP) and 100 mL of toluene were added to the reaction mixture, and the resulting mixture was dehydrated at 160°C and then heated to remove the toluene and held at 180°C for 1 hour to allow the polymerization to proceed. The resulting product was purified by reprecipitation in a large volume of methanol to give a terminally hydroxylated oligomer a19 without ionic groups. The terminally hydroxylated oligomer had a number-average molecular weight was 20,000.

In a 500-mL three-necked flask equipped with a stirrer, a nitrogen inlet tube, and a Dean-Stark trap, 1.1 g of potassium carbonate (a reagent from Aldrich, 8 mmol) and 40.0 g (2 mmol) of the terminally hydroxylated oligomer a19 without ionic groups were placed. After purging the three-necked flask with nitrogen, 100 mL of N-methylpyrrolidone (NMP) and 30 mL of cyclohexane were added to the reaction mixture, and the resulting mixture was dehydrated at 100°C and then heated to remove the cyclohexane. Furthermore, 3.0 g of bis(4-fluorophenyl)sulfone (a reagent from Aldrich, 12 mmol) was added to the reaction mixture, and the resulting mixture was held at 105°C for 1 hour to allow the reaction to proceed. The resulting product was purified by reprecipitation in a large volume of isopropyl alcohol to give a non-ionic group oligomer a19 (termini: fluoro group) represented by the following formula (G14). The non-ionic group oligomer had a number-average molecular weight was 21,000.

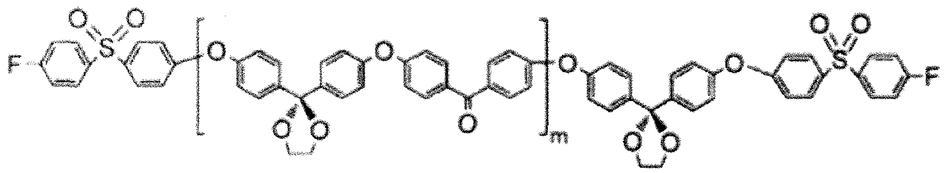

(G14)

(Synthesis of ionic group oligomer a20 represented by the above general formula (G5))

In a 1,000-mL three-necked flask equipped with a stirrer, a nitrogen inlet tube, and a Dean-Stark trap, 27.6 g of potassium carbonate (a reagent from Aldrich, 200 mmol), 25.8 g (100 mmol) of the K-DHBP obtained in Synthesis Example 1, 41.4 g (98 mmol) of the disodium-3,3'-disulfonate-4,4'-difluorobenzophenone obtained in Synthesis Example 2, and 17.9 g of 18-crown-6 (82 mmol, Wako Pure Chemical Company) were placed. After purging the three-necked flask with nitrogen, 300 mL of N-methylpyrrolidone (NMP) and 100 mL of toluene were added to the reaction mixture, and the resulting mixture was dehydrated at 170°C and then heated to remove the toluene and held at 180°C for 1 hour to allow the polymerization to proceed. The resulting product was purified by reprecipitation in a large volume of isopropyl alcohol to give a terminally hydroxylated oligomer a20 with ionic groups represented by the above formula (G5). The terminally hydroxylated oligomer had a number-average molecular weight of 33,000.

(Synthesis of block copolymer b15 comprising oligomer a20 as ionic segment and oligomer a19 as non-ionic segment)

In a 500-mL three-necked flask equipped with a stirrer, a nitrogen inlet tube, and a Dean-Stark trap, 0.56 g of potassium carbonate (a reagent from Aldrich, 4 mmol) and 33 g (1 mmol) of the terminally hydroxylated oligomer a20 with ionic groups were placed. After purging the three-necked flask with nitrogen, 100 mL of N-methylpyrrolidone (NMP) and 30 mL cyclohexane were added to the reaction mixture, and the resulting mixture was dehydrated at 100°C and then heated to remove the cyclohexane. Furthermore, 21 g (1 mmol) of the oligomer a19 (termini: fluoro group) without ionic groups was added to the reaction mixture, and the resulting mixture was held at 105°C for 24 hours to allow the reaction to proceed. The resulting product was purified by reprecipitation in a large volume of isopropyl alcohol to give a block copolymer b15. The block copolymer b15 had a number-average molecular weight of 100,000 and weight-average molecular weight of 360,000.

A polymer electrolyte membrane O (thickness: 10 μm) was prepared in the same manner as in Example 1, except that the block copolymer b15 was used instead of the block copolymer b1. A bicontinuous phase-separated structure was observed by TEM and TEM tomography, indicating the formation of continuous phases by both hydrophilic domains with ionic groups and hydrophobic domains without ionic groups. DSC analysis revealed a crystallization peak and a heat of crystallization of 25.1 J/g. In addition, wide-angle X-ray diffraction analysis showed no crystalline peak (crystallinity: 0%).

[Table 1]

Table 1

| | Electrolyte | Physical Properties | | | | | | | | | | |
|---|---|---|---|---|---|---|---|---|---|---|---|---|
| | Variety | Variety | IEC (meq/g) | Phase-Separated Structure | Heat of Crystallization (J/g) | Crystallinity (%) | Average Periodic Distance in Water (nm) | Average Periodic Distance in Atmosphere (nm) | (Average Periodic Distance in Water) I (Average Periodic Distance in Atmosphere) | Dry-Humid Dimensional Change Ratio (%) | Proton Conductivity at High Humidity (mS/cm) | Proton Conductivity at Low Humidity (mS/cm) |
| Example 1 | Block copolymer b1 | Polymer electorolyte membrane A | 2.5 | Bicontinuous | 15.8 | 0.0 | 68 | 58 | 1.17 | 5.4 | 17.06 | 1.46 |
| Example 2 | Block copolymer b2 | Polymer electorolyte membrane B | 2.7 | Bicontinuous | 13.2 | 0.0 | 78 | 64 | 1.22 | 6.3 | 19.16 | 1.71 |
| Example 3 | Block copolymer b3 | Polymer electorolyte membrane C | 2.1 | Bicontinuous | 22.1 | 0.0 | 57 | 50 | 1.14 | 3.9 | 14.11 | 1.17 |
| Example 4 | Block copolymer b4 | Polymer electorolyte membrane D | 2.4 | Bicontinuous | 16.6 | 0.0 | 74 | 52 | 1.42 | 5.3 | 15.39 | 1.22 |
| Example 5 | Block copolymer b5 | Polymer electorolyte membrane E | 2.1 | Bicontinuous | 21.1 | 0.0 | 66 | 41 | 1.61 | 4.4 | 9.82 | 0.90 |
| Example 6 | Block copolymer b6 | Polymer electorolyte membrane F | 2.4 | Bicontinuous | 0.0 | 0.0 | 80 | 37 | 2.16 | 7.0 | 11.37 | 101 |

(continued)

| | Electrolyte | Physical Properties | | | | | | | | | | |
|---|---|---|---|---|---|---|---|---|---|---|---|---|
| | Variety | Variety | IEC (meq/g) | Phase-Separated Structure | Heat of Crystallization (J/g) | Crystallinity (%) | Average Periodic Distance in Water (nm) | Average Periodic Distance in Atmosphere (nm) | (Average Periodic Distance in Water) I (Average Periodic Distance in Atmosphere) | Dry-Humid Dimensional Change Ratio (%) | Proton Conductivity at High Humidity (mS/cm) | Proton Conductivity at Low Humidity (mS/cm) |
| Example 7 | Block copolymer b7 | Polymer electorolyte membrane G | 2.4 | Bicontinuous | 0.0 | 10.4 | 70 | 40 | 1.90 | 6.8 | 11.60 | 1.07 |
| Comparative Example 1 | Block copolymer b8 | Polymer electorolyte membrane H | 2.1 | Bicontinuous | 15.1 | 0.0 | 70 | 29 | 2.41 | 4.6 | 6.02 | 0.64 |
| Comparative Example 2 | Block copolymer b9 | Polymer electorolyte membrane I | 2.4 | Bicontinuous | 6.4 | 0.0 | 78 | 34 | 2.29 | 6.0 | 8.22 | 0.81 |
| Comparative Example 3 | Block copolymer b10 | Polymer electorolyte membrane J | 2.7 | Bicontinuous | 2.9 | 0.0 | 90 | 39 | 2.31 | 7.2 | 9.42 | 0.89 |
| Comparative Example 4 | Block copolymer b11 | Polymer electorolyte membrane K | 2.4 | Bicontinuous | 0.0 | 0.0 | 85 | 32 | 2.66 | 7.1 | 6.65 | 0.70 |
| Comparative Example 5 | Block copolymer 612 | Polymer electorolyte membrane L | 2.1 | Sea-island | 3.6 | 0.0 | 230 | 101 | 2.28 | 11.2 | 2.37 | 0.18 |

(continued)

| | Electrolyte | Physical Properties | | | | | | | | | | |
|---|---|---|---|---|---|---|---|---|---|---|---|---|
| | Variety | Variety | IEC (meq/g) | Phase-Separated Structure | Heat of Crystallization (J/g) | Crystallinity (%) | Average Periodic Distance in Water (nm) | Average Periodic Distance in Atmosphere (nm) | (Average Periodic Distance in Water) / (Average Periodic Distance in Atmosphere) | Dry-Humid Dimensional Change Ratio (%) | Proton Conductivity at High Humidity (mS/cm) | Proton Conductivity at Low Humidity (mS/cm) |
| Comparative Example 6 | Block copolymer b13 | Polymer electorolyte membrane M | 3.2 | Bicontinuous | 0.5 | 0.0 | 99 | 40 | 2.48 | 13.5 | 11.97 | 1.12 |
| Comparative Example 7 | Block copolymer b14 | Polymer electorolyte membrane N | 1.8 | Bicontinuous | 28.4 | 0.0 | 70 | 30 | 2.33 | 3.1 | 2.14 | 0.14 |
| Comparative Example 8 | Block copolymer b15 | Polymer electorolyte membrane O | 2.0 | Bicontinuous | 25.1 | 0.0 | 82 | 36 | 2.28 | 3.8 | 5.80 | 0.35 |

The polymer electrolyte articles of the present invention preferably have a dry-humid dimensional change ratio of not more than 7.0%, a proton conductivity at low humidity of not less than 0.90 mS/cm, and a proton conductivity at high humidity of not less than 9.50 mS/cm, more preferably a dry-humid dimensional change ratio of not more than 6.5%, a proton conductivity at low humidity of not less than 1.00 mS/cm, and a proton conductivity at high humidity of not less than 11.00 mS/cm, and particularly preferably a dry-humid dimensional change ratio of not more than 6.0%, a proton conductivity at low humidity of not less than 1.10 mS/cm, and a proton conductivity at high humidity of not less than 12.00 mS/cm, in terms of providing both high mechanical strength or physical durability and high proton conductivity.

DESCRIPTION OF SYMBOLS

1. a phase
2. a phase

## Claims

1. A polymer electrolyte article having a phase-separated structure, in which article the average periodic distance in the atmosphere in the phase-separated structure and the average periodic distance in water in the phase-separated structure, which average periodic distances are observed by small-angle X-ray scattering, satisfy the following condition: (the average periodic distance in water) / (the average periodic distance in the atmosphere) ≤ 2.20.

2. The polymer electrolyte article of claim 1, wherein the phase-separated structure is a bicontinuous phase-separated structure.

3. The polymer electrolyte article of claim 1 or 2, wherein the heat of crystallization of the polymer electrolyte article measured by differential scanning calorimetry is not less than 0.1 J/g, or wherein the crystallinity of the polymer electrolyte article measured by wide-angle X-ray diffraction is not less than 0.5%.

4. The polymer electrolyte article of any one of claims 1 to 3, wherein the average periodic distance in the atmosphere is not less than 35 nm.

5. The polymer electrolyte article of any one of claims 1 to 4, wherein the polymer electrolyte article comprises an aromatic hydrocarbon polymer.

6. The polymer electrolyte article of any one of claims 1 to 5, wherein the polymer electrolyte article comprises an aromatic poly(ether ketone) polymer.

7. The polymer electrolyte article of any one of claims 1 to 6, wherein the polymer electrolyte article comprises a block copolymer having one or more segments containing an ionic group (hereinafter referred to as "ionic segments") and one or more segments containing no ionic group (hereinafter referred to as "non-ionic segments").

8. The polymer electrolyte article of claim 7, wherein the ionic segment has a structure represented by the general formula (S1) below:

$$* - Ar^1 - Y^1 - Ar^2 - O - Ar^3 - Y^2 - Ar^4 - O - * \quad (S1)$$

(in the general formula (S1), $Ar^1$ to $Ar^4$ each independently represent a substituted or unsubstituted arylene group; at least one of $Ar^1$ to $Ar^4$ has an ionic group; $Y^1$ and $Y^2$ each independently represent a ketone group or a protecting group from which a ketone group is derivable; the symbol * represents an attachment point for the general formula (S1) or another structural unit).

9. The polymer electrolyte article of claim 7 or 8, wherein the non-ionic segment has a structure represented by the general formula (S2) below:

$$* - Ar^5 - Y^3 - Ar^6 - O - Ar^7 - Y^4 - Ar^8 - O - * \quad (S2)$$

(in the general formula (S2), $Ar^5$ to $Ar^8$ each independently represent an arylene group, provided that $Ar^5$ to $Ar^8$ all do not comprise an ionic group; $Y^3$ and $Y^4$ each independently represent a ketone group or a protecting group from which a ketone group is derivable; the symbol * represents an attachment point for the general formula (S2) or another structural unit).

**10.** A polymer electrolyte membrane comprising the polymer electrolyte article of any one of claims 1 to 9.

**11.** A catalyst layer-coated electrolyte membrane, in which the polymer electrolyte membrane of claim 10 is used.

**12.** A membrane electrode assembly, in which the polymer electrolyte membrane of claim 10 is used.

**13.** A polymer electrolyte fuel cell, in which the polymer electrolyte article of any one of claims 1 to 9 is used.

**14.** A water electrolysis hydrogen generator, in which the polymer electrolyte article of any one of claims 1 to 9 is used.

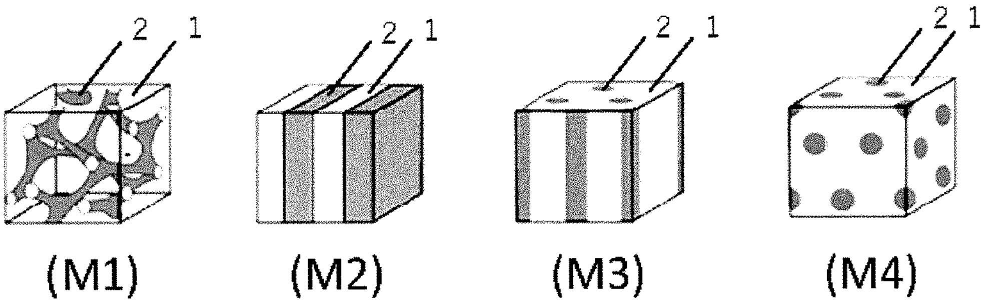


Fig.1

**INTERNATIONAL SEARCH REPORT**

International application No. **PCT/JP2022/012208**

**A. CLASSIFICATION OF SUBJECT MATTER**

***C08G 81/00***(2006.01)i; ***C08J 5/22***(2006.01)i; ***H01B 1/06***(2006.01)i; ***H01B 1/12***(2006.01)i; ***H01M 8/10***(2016.01)i; ***H01M 8/1018***(2016.01)i

FI: H01M8/1018; H01M8/10 101; C08J5/22 CEZ; C08G81/00; C08J5/22 101; H01B1/06 A; H01B1/12 Z

According to International Patent Classification (IPC) or to both national classification and IPC

**B. FIELDS SEARCHED**

Minimum documentation searched (classification system followed by classification symbols)

C08G81/00; C08J5/22; H01B1/06; H01B1/12; H01M8/10; H01M8/1018

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2013/027724 A1 (TORAY INDUSTRIES, INC) 28 February 2013 (2013-02-28) claims 1, 5, 8, paragraphs [0030], [0060] | 1-14 |
| A | JP 2013-196915 A (HITACHI LTD) 30 September 2013 (2013-09-30) claim 1, paragraphs [0020]-[0022] | 1-14 |
| A | WO 2011/016444 A1 (TOYO BOSEKI KABUSHIKI KAISHA) 10 February 2011 (2011-02-10) claim 11, paragraph [0052] | 1-14 |

☐ Further documents are listed in the continuation of Box C.  ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **13 May 2022** | **24 May 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/012208**

| Patent document cited in search report | Publication date (day/month/year) | Patent family member(s) | Publication date (day/month/year) |
|---|---|---|---|
| WO 2013/027724 A1 | 28 February 2013 | US 2014/0193742 A1<br>claims 1, 5, 8, paragraphs [0032], [0062]<br>EP 2749585 A1<br>KR 10-2014-0051939 A<br>CN 103748137 A<br>JP 2013-64125 A<br>CA 2844911 A | |
| JP 2013-196915 A | 30 September 2013 | WO 2013/140865 A1<br>claim 1, paragraphs [0020]-[0022] | |
| WO 2011/016444 A1 | 10 February 2011 | US 2012/0129076 A1<br>claim 11, paragraph [0067]<br>EP 2463326 A1<br>CN 102575014 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2008018487 A
- WO 2013031675 A
- JP 2006278321 A
- JP 2015079762 A


### Non-patent literature cited in the description


- *Annual Review of Physical Chemistry,* 1990, vol. 41, 525